# EUROPEAN PATENT SPECIFICATION

(11) **EP 4 677 427 B1**
(45) Date of publication and mention of the grant of the patent: **25.03.2026**
(21) Application number: 24752152.9
(22) Date of filing: 03.07.2024
(51) Int. Cl.: G05B 19/418, B25J 9/16, B65G 43/08, B65G 47/46, B65G 65/00

(54) **INNOVATIVE HANDLING OF OBJECTS TO BE EXTRACTED/LOADED FROM/ONTO AN AUTOMATED OBJECT TRANSPORT AND/OR SORTING SYSTEM**
INNOVATIVE HANDHABUNG VON ZU EXTRAHIERENDEN/ZULADENDEN OBJEKTEN AUS/AUF EIN AUTOMATISIERTES OBJEKTTRANSPORT- UND/ODER SORTIERSYSTEM
MANUTENTION INNOVANTE D'OBJETS À EXTRAIRE/CHARGER DEPUIS/SUR UN SYSTÈME AUTOMATISÉ DE TRANSPORT ET/OU DE TRI D'OBJETS

(30) Priority: 06.07.2023 EP 23183806; 17.10.2023 IT 202300021624
(43) Date of publication of application: 14.01.2026
(73) Proprietor: Leonardo S.p.A., 00195 Roma (IT)
(72) Inventor: BRIANO, Andrea, 20014 Nerviano (MI) (IT); AKHRAS, M. Alì, 20014 Nerviano (MI) (IT); RAIANO, Luigi, 20014 Nerviano (MI)) (IT); ZUNINO, Andrea, 20014 Nerviano (MI) (IT); ROLLO, Federico, 20014 Nerviano (MI) (IT); AMADIO, Fabio, 20014 Nerviano (MI) (IT)
(74) Representative: Studio Torta S.p.A.
(86) International application number: PCT/IB2024/056488
(87) International publication number: WO 2025/008760

(56) References cited:
- US-A1- 2019 193 947
- US-A1- 2020 030 977
- US-A1- 2020 078 938
- US-A1- 2022 241 982

## Description

### Cross-Reference to Related Applications

This Patent Application claims priority from European Patent Application No. 23183806.1 filed on July 6, 2023 and Italian Patent Application No. 102023000021624 filed on October 17, 2023.

### Technical Field of the Invention

The present invention concerns an innovative technical solution for loading/extracting objects onto/from moving transport units of an object transport and/or sorting system.

### State of the Art

As is known, a sorting system is used to separate, classify and divert the flow of objects and/or goods, e.g., mail, parcels, luggage, etc., entering warehouses and/or distribution centres. In particular, objects and goods are loaded/extracted by one or more robots onto/from moving transport units of a sorting system, i.e., a sorter.

However, the robot's task of picking up objects of random dimensions, shape and/or structure and positioning them with a high success rate on a moving transport unit of the sorter is complicated, leading, for example, to an incorrect positioning of the object on said transport unit (or sorting element) .

To solve such limitations, EP 4 159 329 A1 proposes a system for correcting the incorrect positioning of an object, hereafter also called an article, on a sorting element. The system according to EP 4 159 329 A1 includes:
- a robot and
- a detection device comprising:
   - a system of sensors and
   - a control device;
wherein the detection device is configured to:
- detect a data structure representing the positioning of the article on the sorting element and
- recognise any incorrect positioning of the article on the sorting element on the basis of the data structure.

In the event of incorrect positioning of the article on the sorting element, the control device is designed to control the robot so as to correct the incorrect positioning of the article.

Furthermore, WO 2023/057368 A1 proposes a sorting system that includes:
- a cascade of pick and place robots programmed to:
   - pick up objects of random shape and dimensions from a continuously moving stream of three-dimensional objects transported on a feeder (e.g., conveyor belt); and
   - position the objects directly on an empty space of the sorter while the latter is in operation;
- a control system configured to:
   - process images of the objects upstream of the position of the pick and place robots;
   - select the object to be grasped for each of the pick and place robots; and
   - control each of the robotic actuators to move a gripper into a position to grasp the selected object, move the gripper with the grasped object to a target position and release the grip of the object, positioning the object directly on an empty space of the sorter.

In particular, the pick and place robots can have Cartesian-type of straddling robotic actuators arranged with their main axes at an oblique angle with respect to the transport direction of the sorter, so as to facilitate the acceleration of the objects at the transport speed of the sorter for the release of the object onto said sorter.

Furthermore, CN110420888A describes a collaborative vision-based robotic logistics sorting system:
- a logistics transport line,
- sub-packaging boxes,
- a visual detection device with three degrees of freedom,
- collaborative robots and
- a control system;
wherein the visual detection device is cooperatively and movably mounted above the logistics transport line and is used to collaborate in a self-adaptive manner and identify the positions and information of the parts being transported on the logistics transport line, as well as to identify the positions of the clamping ends of the collaborative robots.

In addition, US 2016/256897 A1 concerns a postal sorting machine that comprises:
- a sorting conveyor equipped with sorting outlets,
- a first feed branch for automatically injecting heterogeneous mail items (e.g., small parcels) into the sorting conveyor and
- a second feed branch for injecting flat and homogeneous mail items (e.g., letters, magazines or similar) onto the sorting conveyor.

In particular, the first feed branch has an inlet for receiving the bulk heterogeneous mail items and is provided with at least one robotic movement arm of the 'pick and place' type;
Moreover, US2020030977 describes a trajectory information generating unit for generating trajectory information defining a trajectory for which a picking hand picks a work at a first position and arranges the work at a second position and an execution control unit for operating a picking apparatus based on trajectory information generated by the trajectory information generating unit.

Furthermore, US2022241982 discloses a work robot which sequentially holds multiple workpieces supplied to a supply area and moves the held workpieces to a work area. In particular, the work robot includes an image-capturing device configured to capture images of the multiple workpieces supplied to the supply area in random orientations and positions, an image processing device configured to recognize multiple workpiece regions from the images captured by the image-capturing device and a control device configured to determine a holding order of the workpiece based on the multiple regions processed by the image processing device.

### Object and Summary of the Invention

In light of the foregoing, the Applicant felt the need to conduct very thorough research in order to develop a technical solution capable of overcoming, or at least alleviating, the technical disadvantages of the currently known solutions in the field of automated systems for transporting and/or sorting objects, thereby arriving at the present invention.

In particular, the aim of the present invention is to increase the payload capacity of a handling system during the loading/extraction step of objects onto/from one or more moving transport units, wherein the transport units belong to an automated transport and/or sorting system for objects, conveniently a sorting system or a sorting machine.

More specifically, the technical solution according to the present invention aims to increase the number of objects processed in the unit of time for the same robotic solution used and objects to be processed.

This and other aims are achieved by the present invention as it relates to an automated transport and/or sorting system of objects, as defined in the appended claims.

In particular, the present invention concerns an automated system for transporting and/or sorting objects comprising:
- automated means of transport that include transport units designed to transport objects;
- a handling system equipped with a gripping system and operable to load objects on the automated means of transport; and
- electronic processing and control means configured to
   - receive data relating to the position and speed of the transport units and data indicative of the geometric characteristics and/or dimensions of the objects transported,
- process the data received and
- control the operation of the handling and gripping systems on the basis of the processed data.

The processing and control means, in order to load a given object on a predetermined transport unit, are programmed to:
- determine a first trajectory to be executed by the handling system over N first objects transported by the transport units to reach said predetermined transport unit, wherein N is an integer greater than zero,
- determine a first maximum height between the heights of the N first objects,
- control the handling system and the gripping system so that they
   - execute the first trajectory holding the given object at a height such that a lower surface of said given object remains above said first determined maximum height and,
   - upon reaching the predetermined transport unit, place the given object on said predetermined transport unit.

Furthermore, the present invention also concerns an automated system for transporting and/or sorting objects comprising:
- automated means of transport that include transport units designed to transport objects;
- a handling system equipped with a gripping system and operable to extract objects from the automated means of transport; and
   - electronic processing and control means configured to
      - receive data relating to the position and speed of the transport units and data indicative of the geometric characteristics and/or dimensions of the objects being transported,
      - process the data received and
      - control the operation of the handling and gripping systems on the basis of the processed data;

The processing and control means, in order to extract a given object from a predetermined transport unit, are programmed to:
- determine a second trajectory to be executed by the handling system over N second objects transported by the transport units to reach said predetermined transport unit, wherein N is an integer greater than zero,
- determine a second maximum height between
   - the heights of the N second objects and
   - the height of the given object
- control the handling system and the gripping system so that they
- execute the second trajectory while holding the gripping system at a height such that a lower surface of said gripping system remains above said second determined maximum height, and
- upon reaching the predetermined transport unit, lift the given object from said predetermined transport unit.

### Brief Description of the Drawings

For a better understanding of the present invention, some preferred embodiments (provided purely by way of explanatory, but absolutely not limiting example) will now be illustrated with reference to the accompanying drawings (not to scale), wherein:
- Figure 1 schematically illustrates an example of a work island made according to an embodiment of the present invention;
- Figure 2 schematically illustrates a functional architecture of a work island according to an embodiment of the present invention;
- Figures 3-8 schematically illustrate an example of loading an object onto a moving transport unit according to an embodiment of the present invention; and
- Figures 9-14 schematically illustrate an example of the extraction of an object from a moving transport unit according to an embodiment of the present invention.

### Description of the Invention

The following description is provided to enable a person skilled in the art to make and use the invention. Various modifications to the embodiments set forth will be immediately clear to the persons skilled in the art and the general principles herein disclosed may be applied to other embodiments and applications without, however, departing from the protection scope of the present invention as defined in the appended claims.

Therefore, the present invention should not be understood as limited to the sole embodiments described and shown, but it must be given the widest scope of protection in accordance with the characteristics defined in the appended claims.

The present invention relates to an innovative technical solution for manipulating objects by means of a robotic manipulator, e.g., a robotic arm, wherein the manipulation is based on a processing of geometric data of objects already present on one or more moving transport units, wherein the moving transport units belong to a sorter or, more generally, to a system for sorting and/or transporting objects.

One of the peculiar aspects that characterises the loading solutions of moving sorting systems is the loading payload capacity, expressed as objects successfully loaded with the same weight in the unit of time; in particular, loading solutions realised with robotic manipulators (e.g., anthropomorphic arms, delta systems, Cartesian manipulators, etc.) are also evaluated according to the loading payload capacity they manage to achieve.

The present invention allows to increase the payload capacity of a sorting system by reducing the average path executed by a handling system during the loading/extraction of an object onto/from a moving transport unit of said sorting system. In particular, the reduction of the average path (hence average cycle time) performed by the handling system is achieved by processing the geometric data (understood as shape and dimensions) characteristic of the objects already present on the other moving transport units of the sorter, i.e., the sorting system.

The technical solution according to the present invention is applicable to the extraction of objects from a transport unit or from an interconnecting surface (e.g., flaps or bellows) present between two successive transport units of a sorter, i.e., the sorting system.

Thus, the aim of the present invention is to increase the payload achieved by a handling system in a sorting system by means of a technical solution capable of increasing the number of objects processed in the unit of time with the same:
- installed robotic solution (e.g., hardware, firmware, geometry and type of manipulator, gripping system),
- weight of the processed objects,
- geometric characteristics of the processed objects
- acceleration and speed transmitted to the object to be manipulated and
- speed of the transport units of the sorting system.

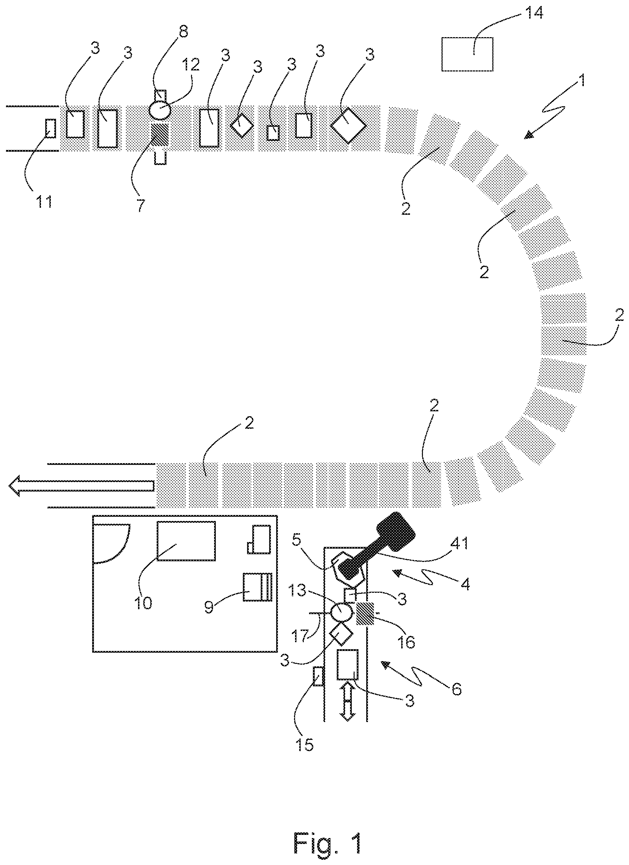

Figure 1 schematically illustrates a work island for loading or extracting objects onto/from a transport unit of a sorting system according to an example embodiment of the present invention.

The work island comprises:
- a sorter 1 that includes a series of transport units 2 connected in sequence to transport objects 3;
- a robotic handling system 4 equipped with a robotic arm 41, wherein at one end of said robotic arm 41 a gripping system 5 is installed for loading or extracting objects 3 onto/from said transport units 2;
- a feeding system 6, e.g., conveyor belt, for transporting the objects 3 extracted from the sorter 1 or to be loaded onto said sorter 1 by means of the handling system 4 and the relative gripping system 5;
- a first measurement system 7 positioned on a first portal 8 straddling the sorter 1 in an appropriate advanced position with respect to the working area of the handling system 4 and configured to measure the dimensions of the objects 3 passing below the first portal 8 and, for each passing object 3, obtain the coordinates of a centroid of a respective upper surface of the object 3 with respect to a first predefined known point on the surface of the transport unit 2;
- a control sub-system of the handling and gripping systems 9;
- a control system of the work island 10 (e.g., implemented by means of a CPU) configured to generate data maps of the recognised transport units 2 and objects 3;
- a first encoder 11 configured to provide position and speed of the transport units 2 of the sorter 1;
- a first vision system 12 positioned on the sorter 1 (in particular, at the first portal 8) and configured to classify the objects 3 passing below the portal 8;
- a second vision system 13 positioned on the feeding system 6 and configured to classify the objects 3 to be loaded onto the sorter 1;
- a control system of the sorter 14 (e.g., implemented by means of a PLC);
- a second encoder 15 configured to provide position, speed and travel direction data of the feeding system 6; and
- a second measurement system 16 positioned on a second portal 17 straddling the feeding system 6 and configured to measure the dimensions of the objects 3 passing below the second portal 17 and, for each passing object 3, obtain the coordinates of a centroid of a respective upper surface of the object 3 with respect to a second predefined known point of the feeding system 6, wherein the second vision system 13 is also installed at the second portal 17.

In the case of a heavy object 3 (e.g., > 5 kg), the handling activities required to perform the positioning (i.e., loading at zero relative speed between object 3 and moving transport unit 2) on a single transport unit 2 of the sorter 1 (comprising a continuous sequence of successive transport units 2), wherein the sorter 1 is moving at a high speed (e.g., > 2 m/s), results in the need to reduce the acceleration to which the heavy object 3 is subjected during handling, so as to reduce the resulting forces (e.g., shear, centrifugal, weight) acting at the interface between the gripping system 5 and the heavy object 3 to be handled.

In particular, while reducing such forces increases the probability of keeping the object 3 gripped, it also entails the need to have the handling system 4 execute trajectories which do not involve abrupt changes in speed and/or sudden changes in radii of curvature, resulting in a partial overlapping of the handling trajectory with the path of the moving transport units 2 of the sorter 1.

In such a context, the present invention allows the control system of the work island 10 to manage the control sub-system of the handling and gripping systems 9 so as to track a transport unit 2 intended to receive the object 3 with a speed having, around the laying point:
- a first component in the direction of motion of the target transport unit 2,
- a second component lying on the same plane as the first component and orthogonal to the latter, namely to the direction of motion of the target transport unit 2 and
- a third component that is orthogonal to the plane where the first and second components lie
wherein the first and second velocity components lie on a plane parallel to the surface of the transport unit 2 in the section of the path wherein the handling 4 and gripping 5 systems are above the target transport unit 2.

Since the handling 4 and gripping 5 systems track the target transport unit 2, in the section of the path near the point of laying the object 3, with a speed having the first component equal to the speed of said transport unit 2 and the second component null, such a characteristic makes it possible to:
- position an object 3 on the transport unit 2 moving with relative null speed, and
- avoid:
- rolling,
- displacement,
- falling and/or
- damage
of the objects 3 following contact with the surface of the target transport unit 2;
- maintain the resulting footprint
   - from the object 3 to be loaded,
   - from the gripping system 5 which grasps and lifts from the feeding system 6, transports and positions on the sorter 1 and
   - from the end of handling system 4 on which said gripping system 5 (i.e., the robotic arm 41) is installed,
within the volume of space above the moving transport unit 2 intended to accommodate the object 3 to be positioned;
- avoid collision of the assembly comprising the object 3 to be loaded, the gripping system 5 and the robotic arm 41 with other objects 3 already present on the transport units 2 preceding and/or following the transport unit 2 intended to accommodate the object 3 to be positioned.

The present invention is based on the collection and analysis of the geometric data of the objects 3 already present on the moving transport units 2 of the sorter 1, in the positions before and after that being handled, wherein said geometric data are detected and processed by the first measurement system 7 (e.g., based on optical, laser, machine vision, Doppler or reflection technologies, etc.) positioned above the transport units 2 of the sorter 1, in a suitable advanced position with respect to the loading point.

In particular, the data relating to the heights, estimated by the measurement system 7, of the objects 3 already present on the transport units 2 of the sorter 1 before and after the transport unit 2 booked by the control system of the work island 10 as the target of the object 3 to be loaded, are processed by the control system of the work island 10 so as to calculate the minimum height to which the lower surface of the object 3 to be handled during the loading trajectory is to be brought.

Such a characteristic allows the control system of the work island 10 to manage the handling system 4 so as to optimise each handling cycle, following a path with each handling cycle that is typically different from the previous one for at least more than one direction component, based on the geometric characteristics of the objects 3 already present on the transport units 2 before and after the target transport unit 2 of the object 3 to be loaded.

The advantage of being able to reduce, on average, the minimum height to be maintained during the positioning steps of an object 3 on the single transport units 2 of the sorter 1, makes it possible to reduce the path executed by the handling system 4 to carry out the entire handling cycle.

Specifically, the reduction of the path executed by the handling system 4 makes it possible to reduce the cycle time required to carry out the single positioning operation, thereby increasing the number of operations executed in the unit of time and thus the performance of the entire system.

Furthermore, the control system of the work island 10, on the basis of the information received from the first vision system 12 and the second vision system 13, provides information to the control sub-system of the handling and gripping systems 9, which orients and centres the object 3 to be loaded onto the transport unit 2 of the sorter 1 so as to maximise the dimension of the objects 3 which can be processed and to ensure having the centroid of the surface generated by the plan view of the object 3 coinciding with the centre of the transport surface of the transport unit 2.

A further advantage generated by the technical solution according to the present invention is the reduction of the cycle time (average time between two successive handlings) required to extract objects 3 from the transport units 2 of the sorter 1 or from the interconnecting surfaces present between two successive transport units 2 of the sorter 1.

Also in this case, the analysis of the geometric data, in particular the height, relating to the objects 3 already present on the transport units 2 before and after that containing the object 3 to be extracted, makes it possible to limit the height of the lower surface of the gripping system 5 during the steps of approaching said gripping system 5 to the object 3 to be extracted and to limit the height to which the lower surface of the object 3 extracted will have to be brought by the handling system 4, during the exit trajectory of the sorter 1.

In particular, the ability of the control system of the work island 10 to manage the control sub-system of the handling and gripping systems 9 makes it possible to track a transport unit 2 (or the portion of the interconnecting surfaces present between two contiguous transport units 2) transporting the object 3 to be extracted with a speed having, around the gripping point:
- a first component in the direction of motion of the target transport unit 2,
- a second component lying on the same plane as the first component and orthogonal to the latter, namely to the direction of motion of the target transport unit 2 and
- a third component that is orthogonal to the plane where the first and second components lie
wherein the first and second velocity components lie on a plane parallel to the surface of the transport unit 2 in the section of the path wherein the handling 4 and gripping 5 systems are above the target transport unit 2.

Since the handling 4 and gripping 5 systems track the target transport unit 2 with a speed, in the section near the gripping point, having the first component equal to the speed of said transport unit 2 and the second component null, such a characteristic allows the following advantages to be obtained:
- the extraction of an object 3 on the moving transport unit 2 with null relative speed between object 3 and gripping system 5
- avoid:
   - rolling
   - displacement
   - falling and/or
   - damage
of objects 3 following contact with the surface of the gripping system 5 in motion;
- maintain the resulting footprint
   - from the object 3 to be extracted,
   - from the gripping system 5 that grasps and lifts the object 3 to be extracted, from the transport unit 2 to the feeding system 6
   - from the robotic arm 41 on which said gripping system 5 is installed,
within the volume of space above the moving transport unit 2 transporting the object 3 to be extracted;
- avoiding collision of the assembly comprising the object 3 to be extracted, the gripping system 5 and the robotic arm 41 of the handling system 4 with other objects 3 already present on the transport units 2 before and/or after the transport unit 2 transporting the object 3 to be extracted.

Also in this case, the advantage of being able to reduce, on average, the minimum height to be maintained during the approaching and disengaging steps of the handling system 4, makes it possible to reduce the path executed by said handling system 4 to carry out the entire handling cycle.

Such a characteristic allows the control system of the work island 10 to manage the handling system 4 so as to optimise each handling cycle, following a path with each handling cycle that is typically different from the previous one for at least more than one direction component, dependent on the geometric characteristics of the objects 3 already present on the transport units 2 before and after the transport unit 2 on which the object 3 to be handled is transported.

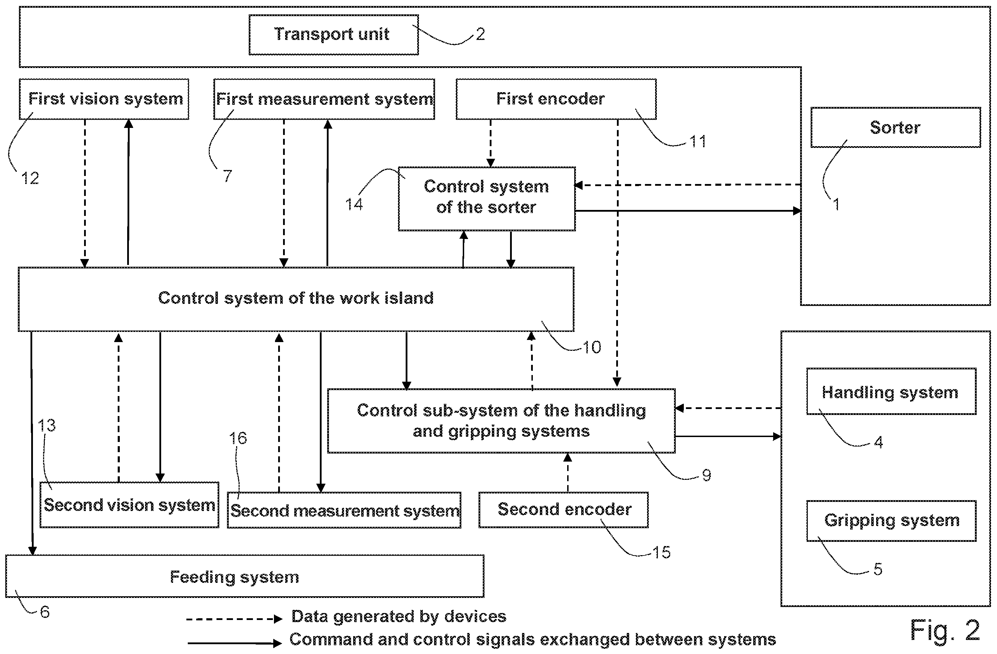

Figure 2 schematically illustrates a functional architecture of a work island according to an embodiment of the present invention, wherein:
- the control system of the work island 10 is:
   - connected to a plurality of systems/devices including the first vision system 12, the first measurement system 7, the second vision system 13, the control sub-system of the handling and gripping systems 9 and the second measurement system 16;
      - configured to receive the data generated by said plurality of systems/devices and send command and control signals to said plurality of systems/devices;
- the control system of the sorter 14 is:
   - connected to the first encoder 11, the sorter 1 and the control system of the work island 10;
   - configured to:
      - receive the data generated by the first encoder 11 and the sorter 1 and
      - send command and control signals to the control system of the work island 10 and to the sorter 1;
- the control sub-system of the handling and gripping systems 9 is:
   - connected to the handling system 4, the gripping system 5, the first encoder 11, the second encoder 15 and the control system of the work island 10;
   - configured to:
      - receive the data generated by the second encoder 15, the handling system 4, the gripping system 5 and the first encoder 11 and
      - send command and control signals to the handling system 4 and the gripping system 5;
      - exchange command and control signals with the control system of the work island 10;
- the control system of the work island 10 is connected to the feeding system 6 (e.g., conveyor belt) and the sorter control system 14 and is configured to send command and control signals to the feeding system 6 and the sorter control system 14.

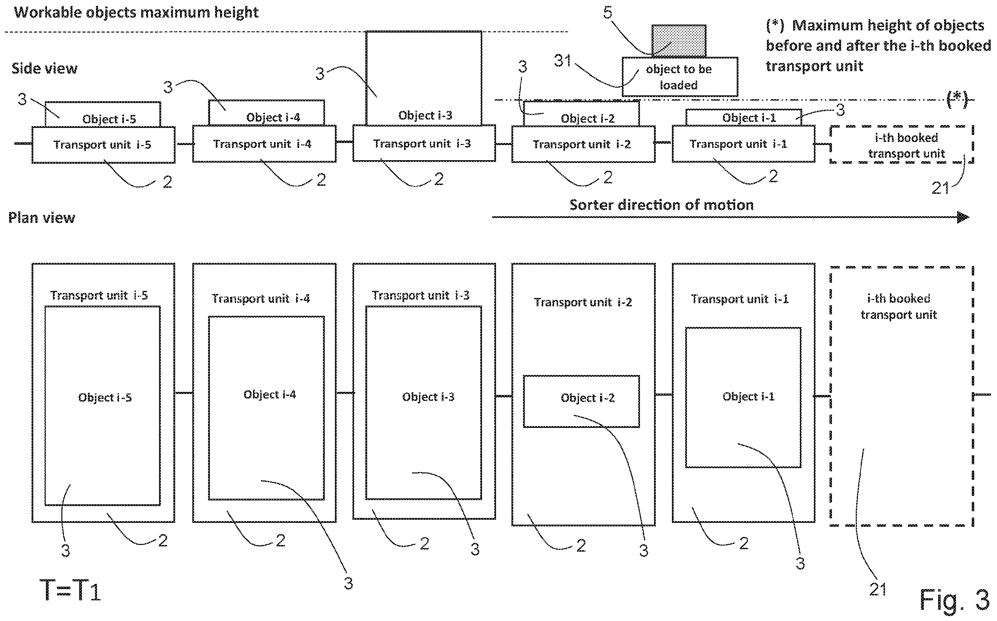

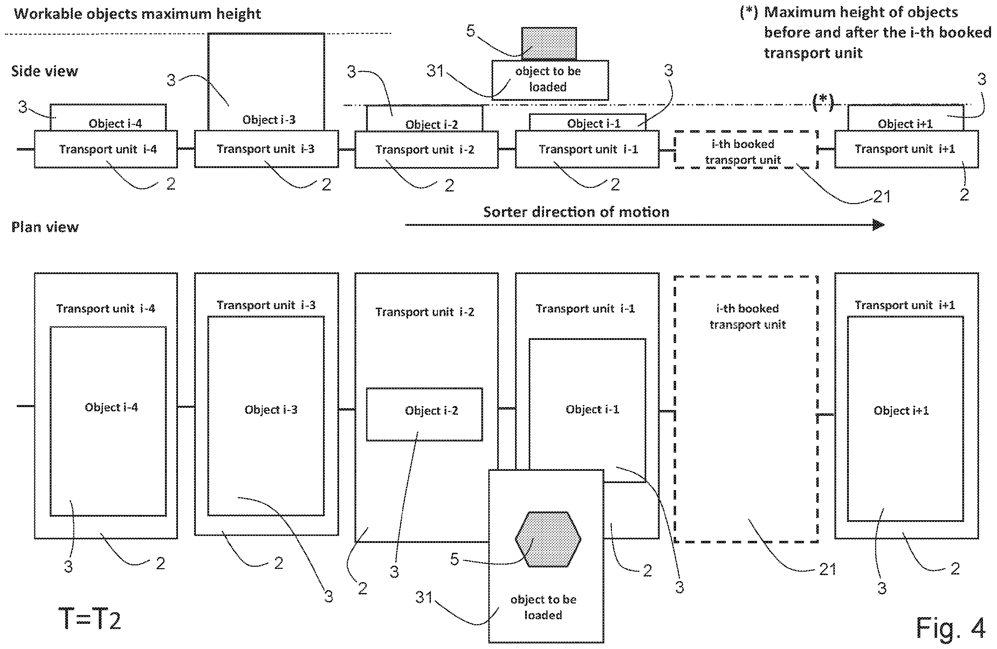

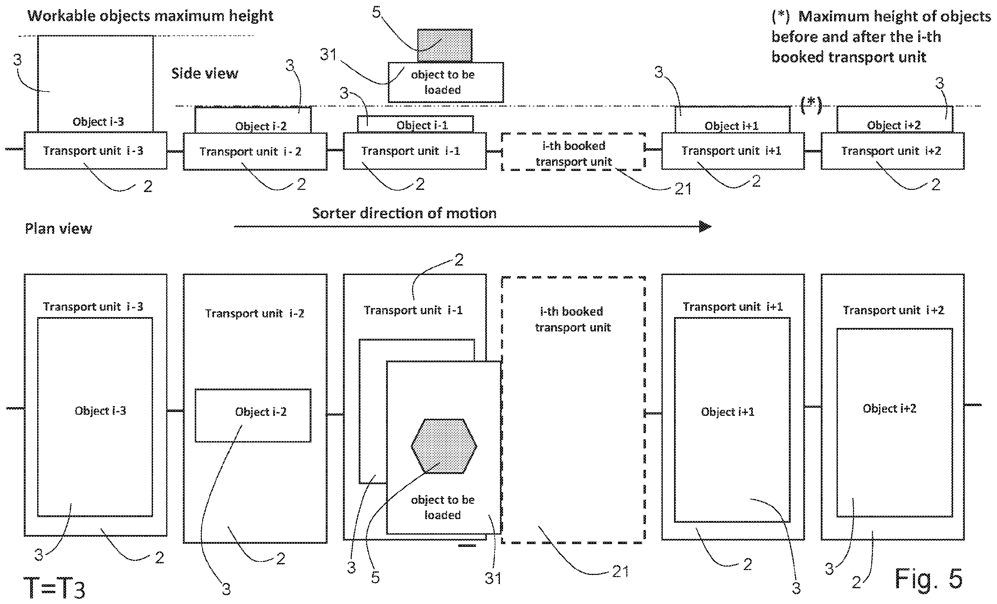

Figures 3-8 schematically illustrate an example of a procedure for loading an object 3 onto a moving transport unit 2 according to an embodiment of the present invention.

Broadly speaking, said procedure includes gripping a given object 31 from the feeding system 6 (such as, for example, a conveyor belt or, more in general, transport units with autonomous movement system, or static feeding units (e.g., cage, pallet, etc.) or the like), the subsequent tracking of a given moving transport unit 21 on which to load the given object 31 and, finally, the positioning of the latter on the given transport unit 21, wherein the positioning of the given object 31 occurs with null relative speed (i.e., the same speed value in the direction of motion of the transport unit 2 and null value of the component orthogonal to the motion of the transport unit 2, the components lying in the plane parallel to the surface of the transport unit 2, in the section of the path wherein the handling 4 and gripping 5 systems are above the target transport unit) between the given object 31 and the given moving transport unit 21.

If the feeding system 6 is of the conveyor belt type, said feeding system 6 transports the objects 3 to be loaded to the handling system 4.

In use, the control system of the work island 10 requests the sorter control system 14 send, synchronously (thanks to the position data obtained by means of the first encoder 11) with the passage of the individual transport units 2 below the first portal 8, the identification data of the individual transport units 2, the relative position, the information on the presence or absence of an object 3 and the measurement data relating to any object 3 present on the transport units 2.

Furthermore, in use, the control system of the work island 10 correlates, at each passage of a transport unit 2 below the first portal 8, the passage sequence below said first portal 8, the identifier of the transport unit 2, the relative position with respect to a third predefined known point of the path performed by the transport units 2, the presence or absence of a loaded object 3, the geometric data obtained from the first measurement system 7 relating to the individual object 3 present on the transport unit 2.

Furthermore, in use, the control system of the work island 10 records and updates, in temporal sequence, a map of the data of the transport units 2 passing through the first portal 8, waiting to request from the sorter control system 14 the booking of a transport unit 21 where a new object 31 is to be loaded.

An example of a data map of the transport units 2 passing through the first portal 8 is provided below:

| **Transport unit ID** | **Relative position** | **Object presence** | **Geometric data** |
|---|---|---|---|
| ........................... | ........................... | ..................... | ..................... |
| 123456789 | ........................... | YES | 567x457x453 |
| 123456788 | ........................... | YES | 345x123x347 |
| 123456787 | ........................... | YES | 202x65x3 |
| 123456786 | ........................... | YES | 340x430x68 |
| 123456785 | ........................... | NO | |
| 123456784 | ........................... | YES | 420x356x76 |
| 123456783 | ........................... | YES | 251x76x4 |

The second vision system 13 and the second measurement system 16 coupled to the feeding system 6, at the request of the control system of the work island 10, detect, estimate and record the recognised objects 3 on a data map and send to the control system of the work island 10, for each recognised object 3, a series of information, such as the geometric dimensions of the object 3, the classification (e.g., box, paper bag, plastic bag, etc.) and the coordinates of the centroid of the upper surface of the object 3 with respect to the second predefined known point of the feeding system 6.

An example of a data map of recognised objects 3 is provided below:

| **Geometric data** | **Classification** | **Centroid coordinates** |
|---|---|---|
| ..................... | ........................ | ........................... |
| 567x457x453 | Box | ........................... |
| 345x123x347 | Box | ........................... |
| 202x65x3 | Paper envelope | ........................... |
| 340x430x68 | Plastic bag | ........................... |
| 420x356x76 | Plastic bag | ........................... |
| 251x76x4 | Paper envelope | ........................... |
| ..................... | ........................ | ........................... |

The control system of the work island 10 knows the positions, coordinates and geometric relationships of all the work island components and the relative known points, wherein said known points correspond to the origin of the individual components' references.

The control system of the work island 10 identifies, with an appropriate algorithm (e.g., the highest estimated object 3 measured by the second measurement system 16 from among those detected by the second vision system 13), the object 31 to be picked up by the feeding system 6 and loaded onto the sorter 1 and sends to the control sub-system of the handling and gripping systems 9 the data required for tracking (by means of the second encoder 15 of the feeding system 6) and subsequently picking up the identified object 31, wherein the data required for tracking include the geometric dimensions, classification and coordinates of the centroid of the upper surface of the identified object 31 relative to the known origin of the handling system 4.

The control system of the work island 10 requests from the sorter control system 14 the availability of a transport unit 21 available for loading, i.e., without objects 3 and enabled; the sorter control system 14 identifies and books a transport unit 21 and communicates the data of the booked transport unit 21 (i.e., identifier and position) to the control system of the work island 10; the latter requests the control sub-system of the handling and gripping systems 9 track the position of the booked transport unit 21, using the information obtained from the first encoder 11.

The control system of the work island 10, having received the booking data of the transport unit 21, maps the data of the transport units 2 relating to the objects 3 present on the transport units 2 before and after the booked transport unit 21, which will be located below the loading trajectory executed by the handling system 4 during the positioning phase of the object 31 to be loaded.

An example of a data map of the transport units 2 relating to the objects 3 present on the transport units 2 before and after the booked transport unit 21 is provided below:

| **Sequence** | **Transport unit ID** | **Relative position** | **Object presence** | **Geometric data** |
|---|---|---|---|---|
| ........................ | ........................... | ........................... | ..................... | ..................... |
| i-4 | 123456789 | ........................... | YES | 567x457x453 |
| i-3 | 123456788 | ........................... | YES | 345x123x347 |
| i-2 | 123456787 | ........................... | YES | 202x65x3 |
| i-1 | 123456786 | ........................... | YES | 340x430x68 |
| i | 123456785 | ........................... | NO | |
| i+1 | 123456784 | ........................... | YES | 420x356x76 |
| i+2 | 123456783 | ........................... | YES | 251x76x4 |

From the data processing described above, the control system of the work island 10 obtains the maximum height of the objects 3 present on the transport units 2 which will be below the loading trajectory executed by the handling system 4, and sends the information (i.e., data of the object 31 to be loaded and relative position, minimum height to be maintained during passage on the sorter 1, data of the booked transport unit 21 and relative position) to the control sub-system of the handling and gripping systems 9.

Thanks to the information on the heights of the objects 3 present on the transport units 2 before and after the booked transport unit 21, the control system of the work island 10 determines the minimum height at which the handling system 4 must maintain the lower surface of the object 31 to be loaded.

In particular, the minimum height will no longer be equal to or greater than the maximum height of the objects 3 which can be processed by the sorter 1 (plus a protection value to account for measurement tolerances and possible oscillations of the object 3), but will be equal to or slightly greater than the maximum height of the objects 3 transported by the transport units 2 before the one booked for the object 31 to be loaded along the path followed by the handling system 4 (only the heights of the objects 3 which, during the time necessary for the handling system 4 to execute the trajectory needed to reach the booked transport unit 21, will be on the transport units 2 below the trajectory of the handling system 4).

The control sub-system of the handling and gripping systems 9 starts to track both the position of the booked transport unit 21 using the advancement data of the sorter 1 generated by the first encoder 11, and the position of the object 31 to be picked up by the feeding system 6 using the data provided by the second encoder 15.

The handling system 4, by means of the gripping system 5, following the picking of the object 31 from the feeding system 6, during the approach and tracking path of the booked transport unit 21, in order to avoid collisions with the moving objects 3 already present on the other transport units 2 of the sorter 1, must keep the lower surface of the object 31 being processed above the maximum height obtained from the control system of the work island 10.

Such a condition requires the handling system 4 lift and keep lifted the object 31 to be loaded so that the lowest point of the lower surface of the object 31 is at a height, with respect to the surface of the booked transport unit 21, which is equal to, or slightly greater than (considering an additional protection value useful for taking into account measurement tolerances, deformations of the container and possible oscillations of the objects 3), the determined maximum height of the objects 3 actually contained on the transport units 2 before the booked transport unit 21, during the time needed for the execution of the handling path.

The handling system 4, following the positioning of the object 31 at null relative speed on the booked transport unit 21, will have to continue to follow the movement of the booked transport unit 21 for a section of the path useful for the handling system 4 to exit from the volume of space above said booked transport unit 21, so as not to collide with any objects 3 already present on the transport units 2 following the booked one along the path followed by the handling system 4.

In this respect, as illustrated in Figures 3-5, the handling system 4, by means of the gripping system 5, tracks, in the same direction of motion as the sorter 1, a booked transport unit 21, indicated in Figures 3-5 as i-th transport unit 21, wherein the gripping system 5, so as to avoid collisions with the moving objects 3 already present on the transport units 2 before the i-th transport unit 21 (indicated by i-1, i-2, etc.), must keep the lower surface of the object 31 being processed above the maximum height (indicated by a dotted line) obtained from the control system of the work island 10; thereby, the handling system 4 lifts and keeps lifted the object 31 to be loaded, with respect to the surface of the booked transport unit 21, so that the lowest point of the lower surface of the object 31 to be loaded is at a height equal to the maximum height (plus an additional protection value useful for taking into account measurement tolerances, deformations of the container and possible oscillations of the objects 3) of the objects 3 actually transported on said transport units 2 before the i-th transport unit 21, during the period of time useful for the transport of said object 31 to be loaded.

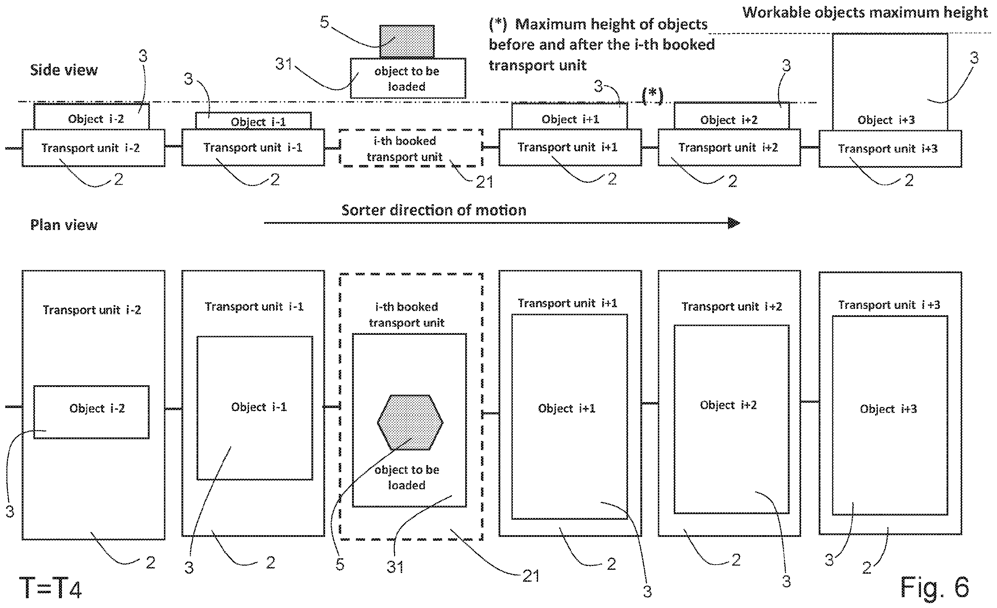

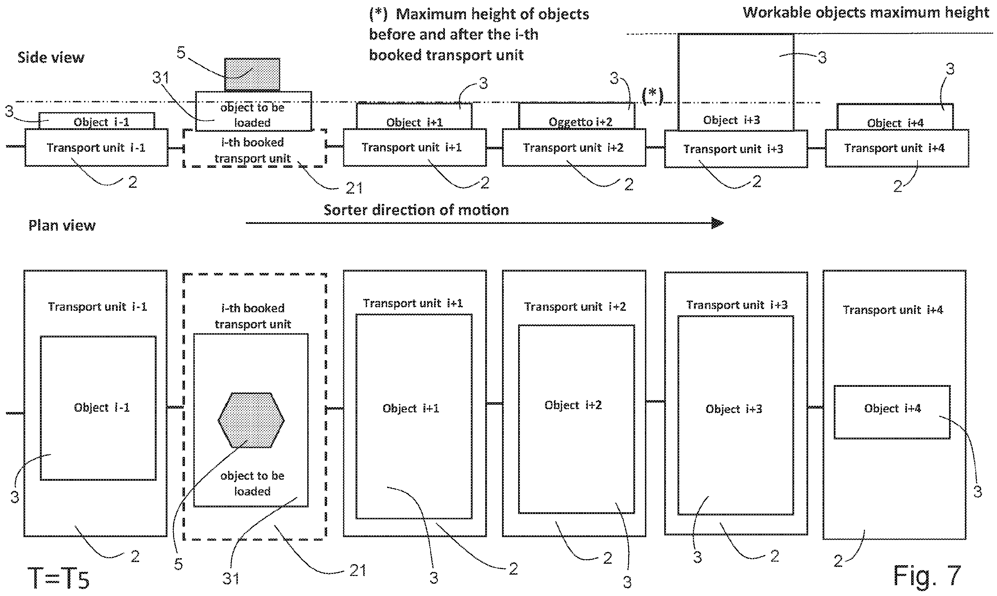

In Figures 6 and 7, the handling system 4, by means of the gripping system 5, loads the object 31 onto the i-th transport unit 21 with zero relative speed between said object 31 and the i-th transport unit 21.

The control system of the work island 10, on the basis of the information received from the first vision system 12, provides information to the control sub-system of the handling and gripping systems 9, so that the handling 4 and gripping 5 systems orient and centre the object 31 on the i-th transport unit 21, so as to maximise the size of the processable objects and ensure that the centroid of the surface generated by the plan view of the object 31 is coincident with the centre of the surface of the i-th transport unit 21.

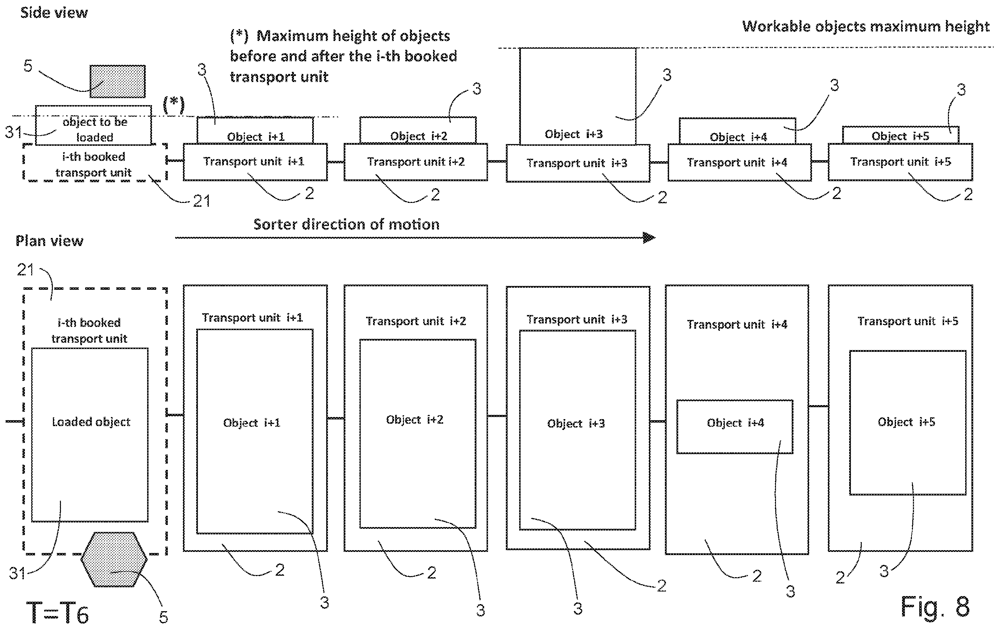

Figure 8 shows the handling system 4, which, together with the corresponding gripping system 5, following the positioning of the object 31 on the i-th transport unit 21, continues to follow the movement of the i-th transport unit 21 for a section of the path useful to the handling system 4, and therefore to the gripping system 5, to exit from the volume of space above the i-th transport unit 21, so as not to collide with any objects 3 already present on the transport units 2 after (indicated with i+1, i+2, etc.) the i-th transport unit 21.

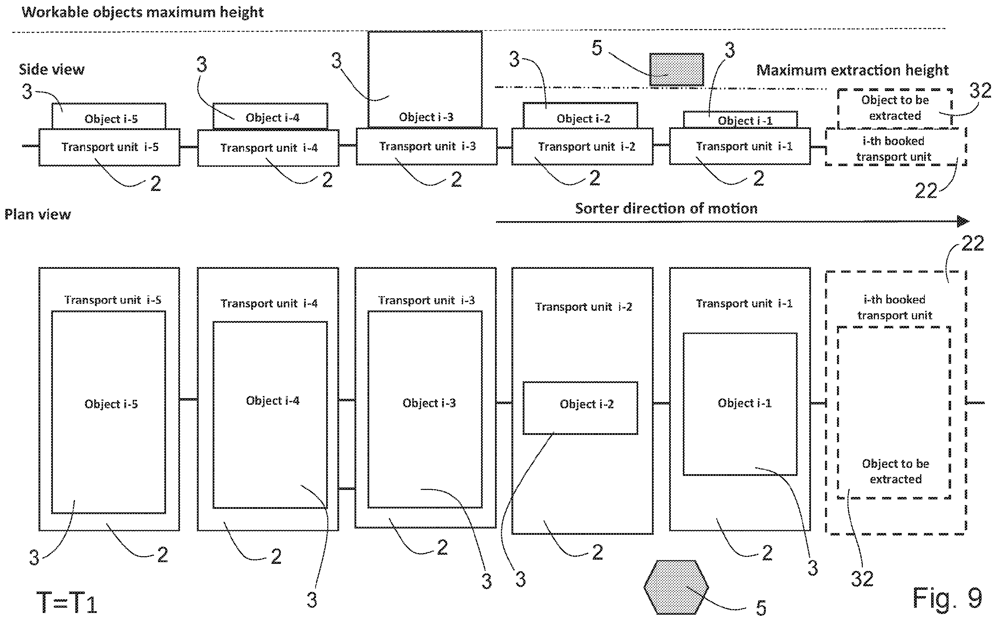

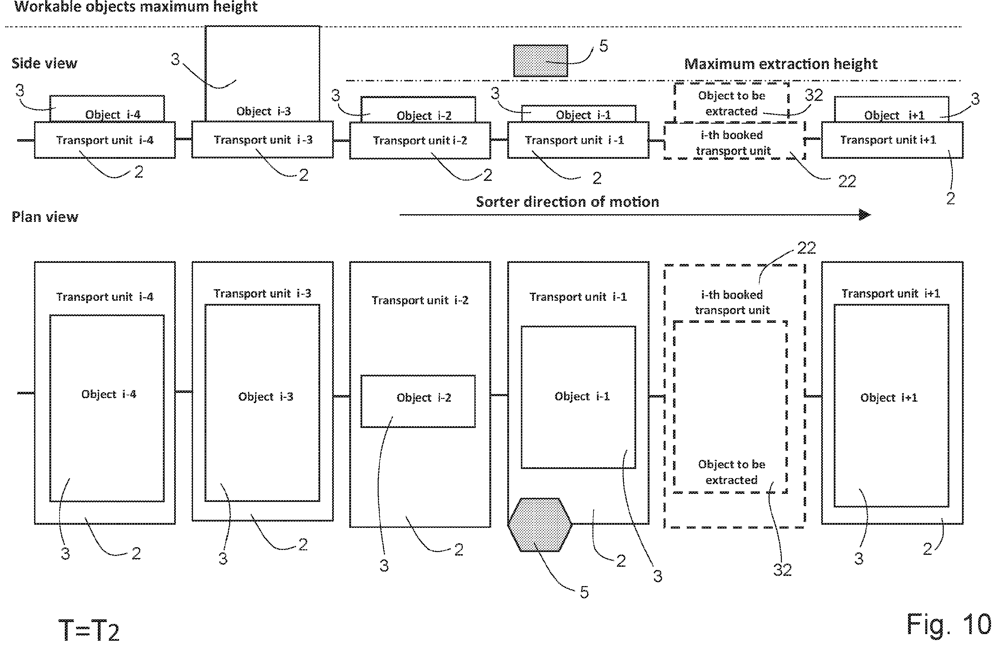

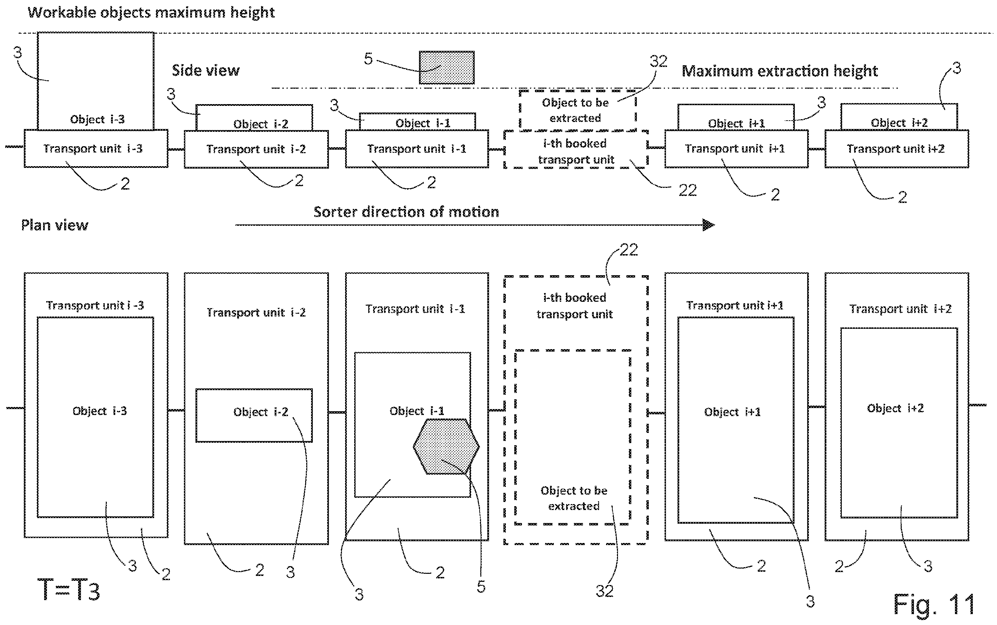

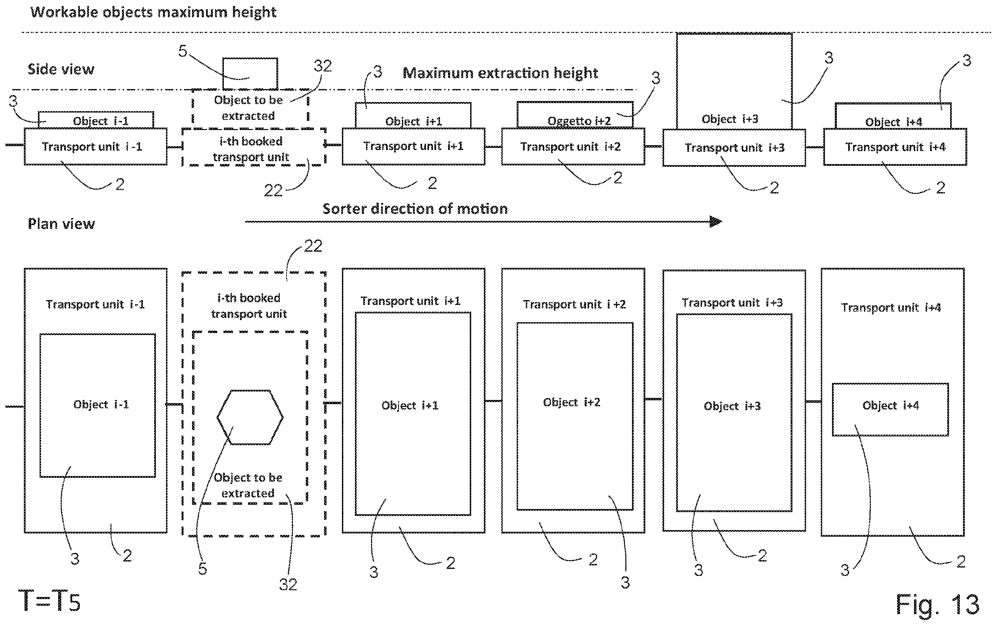

Figures 9-14 schematically illustrate an example of a procedure for extracting an object 32 from a moving transport unit 22 according to an embodiment of the present invention.

The extraction procedure of the object 32 relates to both an object 32 erroneously positioned between two transport units 2 of the moving sorter 1 and the extraction of an object 32 transported by a transport unit 22 of the sorter 1. Once the extraction of the object 32 is complete, the latter is positioned on the feeding system 6 (such as, for example, a conveyor belt or, more generally, transport units with an autonomous movement system, or static feeding units (e.g., cage, pallet, etc.) or similar). If the feeding system 6 is of the conveyor belt type, said feeding system 6 moves in a direction opposite that of the feeding system 6 used for loading objects 3.

The control system of the work island 10 requests the sorter control system 14 send, synchronously with the passage of the individual transport units 2 below the first portal 8 (thanks to the position data obtained by means of the first encoder 11), the identification data of the individual transport units 2, the relative position, the information of the presence or absence of an object 3 located on a transport unit 2 or on an interconnecting surface of two contiguous transport units 2 and the measurement data relating to the possible object 3 present on the transport unit(s) 2.

The control system of the work island 10 correlates, at each passage of a transport unit 2 below the first portal 8: the passage sequence below the first portal 8, the identifier of the transport unit 2, the relative position with respect to the third predefined known point of the path made by the transport units 2, the presence or absence of an object 3 loaded on a transport unit 2 or on an interconnecting surface of two transport units 2, the geometric data obtained from the first measurement system 7 relating to the individual object 3 present on the transport units 2.

The control system of the work island 10, while waiting to receive from the sorter control system 14 a request to extract an object 32 from a transport unit 22, records and updates, in temporal sequence, the data map of the transport units 2 with the relative data indicated above, which pass through the first portal 8.

An example of a data map of the transport units 2 passing through the first portal 8 is provided below:

| **Transport unit ID** | **Relative position** | **Object between Transport units** | **Presence of object 3** | **Geometric data** |
|---|---|---|---|---|
| ........................... | ........................... | ..................... | ..................... | ..................... |
| 123456789 | 1254 | NO | YES | 567x457x453 |
| 123456788 | 1259 | NO | YES | 345x123x347 |
| 123456787 | 1264 | NO | YES | 202x65x3 |
| 123456786 | 1269 | NO | YES | 340x430x68 |
| 123456785 | 1274 | YES | NO | 202x65x3 |
| 123456784 | 1279 | YES | NO | 420x356x76 |
| 123456783 | 1284 | NO | YES | 251x76x4 |

The control system of the work island 10 knows the positions, coordinates and geometric relationships of the work island components and the relative known points, wherein the known points correspond to the origin of the individual components' references.

The sorter control system 14 communicates to the control system of the work island 10 the need to execute the extraction of an object 32 from a transport unit 22 or from an interconnecting surface between two contiguous transport units 2, also communicating the position and identifier of the transport unit 22 containing the object 32 to be extracted/the position and identifier of the transport units 2 containing the object 32 to be extracted.

Following the extraction request by the sorter control system 14, the control system of the work island 10 requests the first vision system 12 and the first measurement system 7 present on the sorter 1, detect, estimate and record on the data map of the recognised objects 3, the information of the object 32 contained on the identified transport unit 22, including: the geometric dimensions of the object 32, the classification (e.g., box, paper envelope, plastic bag, etc.) and the coordinates of the centroid of the upper surface with respect to the first known predefined point on the surface of the transport unit 2/the joining surface between two transport units 2 containing it.

An example of a data map of recognised objects 3 is provided below:

| **Geometric data (LxWxH)** | **Classification** | **Centroid coordinates** |
|---|---|---|
| ..................... | ........................ | ........................... |
| 567x457x453 | Box | ........................... |
| 345x123x347 | Box | ........................... |
| 202x65x3 | Paper envelope | ........................... |
| 340x430x68 | Plastic bag | ........................... |
| 420x356x76 | Plastic bag | ........................... |
| 251x76x4 | Paper envelope | ........................... |

The control system of the work island 10 sends the extraction request and the above information to the control sub-system of the handling and gripping systems 9, which starts tracking: both the position of the identified transport unit 22 containing the object 32 to be extracted (using the advancement data of the sorter 1 generated by the first encoder 11), and the position of the moving conveyor belt of the feeding system 6 (using the data provided by the second encoder 15).

The control system of the work island 10, having received the extraction request data of an object 32 from the identified transport unit 22, processes the data map of the transport units 2 relating to the objects 3 present in the transport units 2 before and after the identified transport unit 22, which will be below the trajectory executed by the handling system 4 during the extraction step of the object 32.

An example of a data map of the transport units 2 relating to the objects 3 present on the transport units 2 before and after the booked transport unit 22 is provided below:

| **Sequence** | **Transport unit ID** | **Relative position** | **Object between Transport units** | **Object presence** | **Geometric data** |
|---|---|---|---|---|---|
| ........................... | ........................... | ........................... | ..................... | ..................... | ..................... |
| i-5 | 123456789 | 1254 | NO | YES | 567x457x453 |
| i-4 | 123456788 | 1259 | NO | YES | 345x123x347 |
| i-3 | 123456787 | 1264 | NO | YES | 202x65x3 |
| i-2 | 123456786 | 1269 | NO | YES | 340x430x68 |
| i-1 | 123456785 | 1274 | NO | YES | 202x65x3 |
| i | 123456784 | 1279 | NO | YES | 420x356x76 |
| i+1 | 123456783 | 1284 | NO | YES | 251x76x4 |

From the processing of the data indicated above, the control system of the work island 10 obtains the maximum height of the objects 3 present on the transport units 2 that will be below the extraction trajectory executed by the handling system 4; in particular, the minimum height at which the lower surface of the gripping system 5 must be maintained during the approach trajectory and the gripping of the object 32 to be extracted, must be equal to or slightly greater than what is greater among: the height of the object 32 to be extracted and the maximum of the heights of the objects 3 present on the transport units 2 that will be below the extraction trajectory executed by the handling system 4 during the approaching step of said handling system 4 to the object 32 to be extracted (plus an additional protection value useful to take into account measurement tolerances, deformations of the container and possible oscillations of the objects 3).

Similarly, the control system of the work island 10 processes the minimum height at which the handling system 4 will have to maintain the lower surface of the extracted object 32 during the exit trajectory, wherein said minimum height will have to be slightly higher or equal to the maximum of the heights of the objects 3 present on the transport units 2 after, along the exit trajectory of the handling system 4, the identified transport unit 22 and which are below said trajectory (plus an additional protection value useful to take into account measurement tolerances, deformations of the container and possible oscillations of the objects 3).

The control system of the work island 10 sends the following information to the control sub-system of the handling and gripping systems 9: the geometric data of the object 32 to be picked up, the relative position with respect to the identified transport unit 22, the minimum height to be maintained during the trajectory approaching the identified transport unit 22, the data of the identified transport unit 22, the relative position of said identified transport unit 22 and the minimum height to be maintained when exiting the identified transport unit 22.

The handling system 4 executes: the approach trajectory, the extraction at null relative speed of the object 32 and the exit trajectory, using the data provided to the control sub-system of the handling and gripping systems 9 by the control system of the work island 10.

The handling system 4, following the extraction of the object 32 from the identified transport unit 22, will have to continue to follow the movement of the identified transport unit 22 on which the extracted object 32 was present for a section of the path useful for the handling system 4 to exit from the volume of space present above the extracted object 32, so as not to bump any objects 3 already present on the transport units 2 after the one being manipulated.

Following the extraction of the object 32 from the transport unit 22, the handling system 4 will continue the trajectory so as to arrive above the feeding system 6 (suitably controlled by the control system of the work island 10, so as to have a direction of motion compatible with the movement of the extracted object) to execute the laying of the extracted object 32.

Once the extracted object 32 has been laid, the control sub-system of the handling and gripping systems 9 will inform the control system of the work island 10 of the end of the extraction procedure and the availability to execute a new work mission.

In this regard, as illustrated in Figures 9-11, the handling system 4 with the gripping system 5 tracks, in the same direction of motion as the sorter 1, a transport unit 22 containing the object 32 to be extracted, indicated in Figures 9-11 as the i-th transport unit 22, wherein the gripping system 5 must maintain its lower surface at a height equal to the minimum height, wherein the latter is equal to or slightly greater than the greater value among: the height of the object 32 to be extracted and the maximum of the heights of the objects 3 present on the transport units 2 which will be below the extraction trajectory executed by the handling system 4 during the approaching step of said handling system 4 to the object 32 to be extracted (in the example shown in Figures 9-11, the minimum height is equal to the height of the object 32 to be extracted plus an additional protection value useful to take into account measurement tolerances, deformations of the container and possible oscillations of the objects 3); thereby, the handling system 4 avoids collisions with the moving objects 3 already present on the transport units 2 before (indicated for example by transport units i-1, i-2, etc.) the i-th transport unit 22.

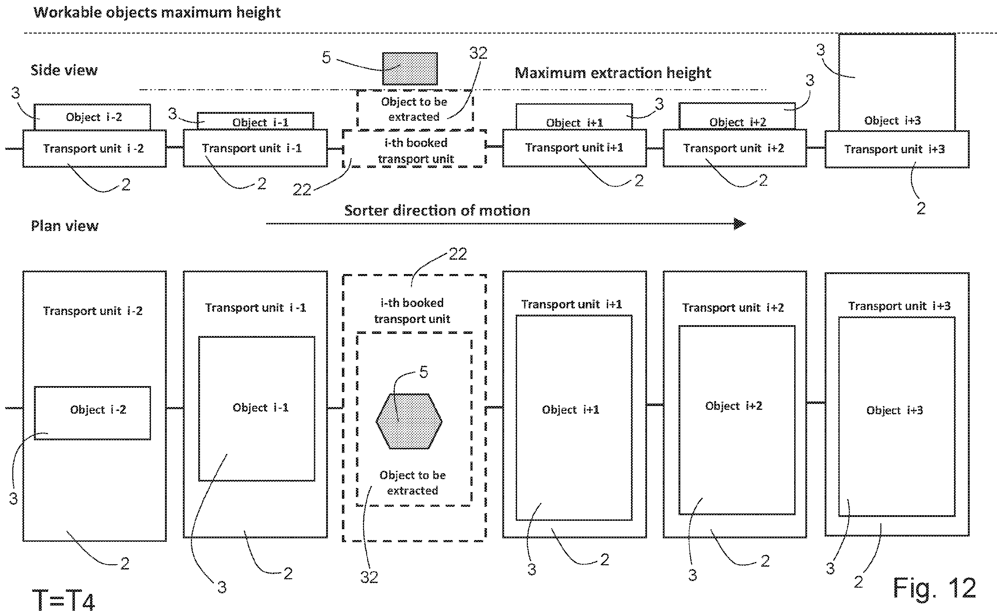

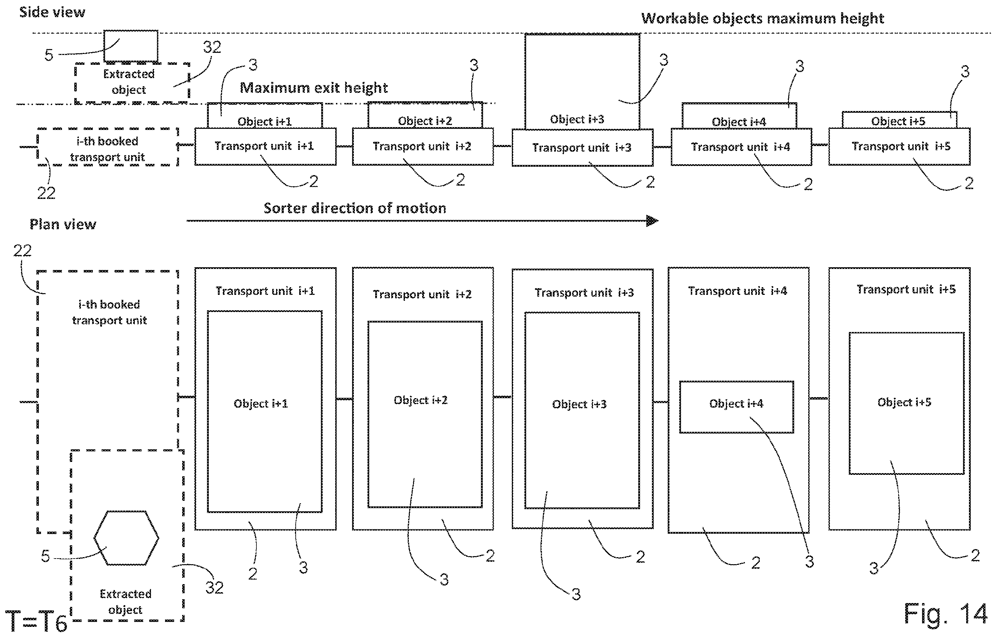

In Figures 12-13, the handling system 4, by means of the gripping system 5, grasps, lifts (to a height such that the lower surface of the extracted object 32 is at a height equal to or slightly higher than the maximum among the objects 3 which are below the extraction trajectory of the object 32) and extracts the object 32 from the i-th transport unit 22 at a null relative speed between said object 32 to be extracted and the i-th transport unit 22; as illustrated in Figure 14, the handling system 4 will continue the trajectory in order to arrive above the feeding system 6 to execute the laying of the extracted object 32.

Furthermore, the present invention enables the handling 4 and gripping 5 systems to be able to place the extracted object 32 on a free transport unit 2 of the sorter 1.

The advantage of being able, on average, to reduce the minimum height to be maintained during the steps of approaching and exiting of the handling system 4 from the identified transport unit 21/22 is that the path executed by the handling system 4 to carry out the entire manipulation cycle can be reduced. Such a characteristic allows the control system of the work island 10 to manage the handling system 4 so as to optimise each handling cycle, following a path with each handling cycle that is typically different from the previous one for at least more than one direction component, based on the geometric characteristics of the objects 3 already present on the transport units 2 before and after the identified transport unit 22 on which to carry out the extraction of the object 32.

Reducing the average path executed by the handling system 4 reduces the cycle time required to carry out the single operation of loading an object 31 with the same:
- robotic solution installed
- weight of the objects 3 processed
- characteristics of the objects 3 processed
- accelerations and speeds transmitted by the handling 4 and gripping 5 systems to the object 3 during handling and
- speed of the sorter 1.

The present invention makes it possible, in the unit of time, to increase the number of objects loaded/extracted 31,32 onto/from the transport units 21,22 by the handling system 4 thanks to the creation of more efficient paths on average.

From the foregoing disclosure, the many innovative characteristics and the innumerable technical advantages of the present invention are immediately evident to a person skilled in the art.

In conclusion, it is important to note that, while the above-described invention refers in particular to very specific embodiments, it must not be intended as limited to such embodiments, including within its scope all the variants, modifications or simplifications covered by the appended claims.

## Claims

1. Automated system for transporting and/or sorting objects (3) comprising:
• automated means of transport (1) that include transport units (2) designed to transport objects (3);
• a handling system (4) equipped with a gripping system (5) and operable to load objects (31) on the automated means of transport (1); and
• electronic processing and control means configured to
• receive data relating to the position and speed of the transport units (2) and data indicative of the geometric characteristics and/or dimensions of the objects (3) being transported,
• process the data received and
• control the operation of the handling (4) and gripping (5) systems on the basis of the processed data;
**characterised by** the fact that the processing and control means, in order to load a given object (31) on a predetermined transport unit (21), are programmed to:
• determine a first trajectory to be executed by the handling system (4) over N first objects (3) transported by the transport units (2) to reach said predetermined transport unit (21), wherein N is an integer greater than zero,
• determine a first maximum height between the heights of the N first objects (3),
• control the handling system (4) and the gripping system (5) so that they
• execute the first trajectory holding the given object (31) at a height such that a lower surface of said given object (31) remains above said first determined maximum height and,
• upon reaching the predetermined transport unit (21), place the given object (31) on said predetermined transport unit (21).

2. The system of claim 1, wherein the electronic processing and control means are programmed to control the handling system (4) and the gripping system (5) such that they place the given object (31) on the predetermined transport unit (21) with a speed having:
• a first component in the direction of motion of the predetermined transport unit (21) and
• a second component lying in the same plane of the first component and being orthogonal to the first component, namely orthogonal to the direction of motion of the predetermined transport unit (21)
wherein
• the first and second velocity components lie on a plane parallel to the surface of the predetermined transport unit (21) in the section of the path wherein the handling (4) and gripping (5) systems are above the predetermined transport unit (21),
• the first component is equal to the speed of said predetermined transport unit (21), and
• the second component is null.

3. The system according to claim 1 or 2, wherein the electronic processing and control means are configured to control the operation of the handling (4) and gripping (5) systems on the basis of the processed data in order to orient and centre the given object (31) on the predetermined transport unit (21) so as to ensure to have that a centroid of the surface generated by the plan view of the given object (31) coincident with a centre of the transport surface of the predetermined transport unit (21).

4. The system according to any claim 1-3, further comprising:
• a first encoder (11) configured to provide position and speed of the transport units (2);
• a first vision system (12) configured to classify objects (3) transported by the transport units (2); and
• a first measurement system (7) configured to measure the dimensions of the objects (3) transported by the transport units (2);
wherein the electronic processing and control means are configured to:
• acquire
• from the first encoder (11) position and speed data of the transport units (2),
• from the first vision system (12) data relating to the classified transported objects (3),
• from the first measuring system (7) data indicative of the dimensions of the objects (3) transported;
• process the acquired data and
• control the operation of the handling (4) and gripping (5) systems on the basis of the processed data.

5. The system of claim 4, wherein the first vision system (12), that comprises a plurality of sensors, is configured to measure the dimensions of the objects (3) transported by the transport units (2) and provide the electronic processing and control means with also data indicative of the dimensions of the objects (3) transported.

6. The system according to claim 4 or 5, wherein the electronic processing and control means are configured to control the operation of the handling (4) and gripping (5) systems based on the processing of the data acquired by the first vision system (12), in order to orient and centre the given object (31) on the predetermined transport unit (21) so as to ensure to have a centroid of the surface generated by the plan view of the given object (31) coincident with a centre of the transport surface of the predetermined transport unit (21).

7. The system according to any claim 4-6, wherein the electronic processing and control means are configured to, on the basis of the acquired data, record and update, in temporal sequence, a map of the data relating to the transport units (2).

8. The system according to any claim 4-7, wherein the processing and control means are configured to, on the basis of the acquired data, record and update, in a temporal sequence, a map of the data relating to the objects (3) transported by the transport units (2).

9. The system according to any preceding claim, further comprising a feeding system (6) configured to provide objects (31) to be loaded on the automated means of transport (1); wherein the electronic processing and control means are configured to control the handling system (4) and the gripping system (5) such that they pick up from the feeding system (6) the given object (31) to be loaded on the predetermined transport unit (21).

10. The system according to claim 9, wherein the feeding system (6) includes transport units (2) with an autonomous movement system or static feeding units.

11. The system according to claim 9 or 10, further comprising:
• a second encoder (15) configured to provide position, speed and direction data of the feeding system (6);
• a second vision system (13) configured to classify objects (31) on the feeding system (6); and
• a second measurement system (16) configured to measure the dimensions of the objects (31) on the feeding system (6) ;
wherein the electronic processing and control means are configured to:
• acquire
• from the second encoder (15) the position, speed and direction data of the feeding system (6),
• from the second vision system (13) data relating to the classified objects (3) on the feeding system (6),
• from the second measurement system (16) data indicative of the dimensions of the object (31) on the feeding system (6);
• process the acquired data and
• control the operation of the handling (4) and gripping (5) systems on the basis of the processed data.

12. The system according to claim 11, wherein the second vision system (13), that comprises a plurality of sensors, is configured to measure the dimensions of the objects (3) on the feeding system (6) and provide the electronic processing and control means with also data indicative of the dimensions of the objects (3) on the feeding system (6).

13. Automated system for transporting and/or sorting objects (3) comprising:
• automated means of transport (1) that include transport units (2) designed to transport objects (3);
• a handling system (4) equipped with a gripping system (5) and operable to extract objects (32) from the automated means of transport (1); and
• electronic processing and control means configured to
• receive data relating to the position and speed of the transport units (2) and data indicative of the geometric characteristics and/or dimensions of the objects (3) being transported
• process the data received and
• control the operation of the handling (4) and gripping (5) systems on the basis of the processed data;
**characterised by** the fact that the processing and control means, in order to extract a given object (32) from a predetermined transport unit (22), are programmed to:
• determine a second trajectory to be executed by the handling system (4) over N objects (3) transported by the transport units (2) to reach said predetermined transport unit (22), wherein N is an integer greater than zero,
• determine a second maximum height between
• the heights of the N objects (3) and
• the height of the given object (32)
• control the handling system (4) and the gripping system (5) so that they
• execute the second trajectory while holding the gripping system (5) at a height such that a lower surface of said gripping system (5) remains above said second determined maximum height; and
• upon reaching the predetermined transport unit (22), lift the given object (32) from said predetermined transport unit (22).

14. The system of claim 13, wherein the electronic processing and control means are programmed to control the handling system (4) and the gripping system (5) such that they lift the given object (32) from the predetermined transport unit (22) with a speed having:
• a first component in the direction of motion of the predetermined transport unit (22),
• a second component lying on the same plane as the first component and orthogonal to the latter, namely to the direction of motion of the predetermined transport unit (22), wherein
• the first and second velocity components lie on a plane parallel to the surface of the predetermined transport unit (22) in the section of the path where the handling (4) and gripping (5) systems are above the predetermined transport unit (22)
• the first component is equal to the speed of said predetermined transport unit (22), and
• the second component is null.

15. The system according to claim 13 or 14, further comprising:
• a first encoder (11) configured to provide position and speed of the transport units (2);
• a first vision system (12) configured to classify objects (3) transported by the transport units (2); and
• a first measurement system (7) configured to measure the dimensions of the objects (3) transported by the transport units (2);
wherein the electronic processing and control means are configured to:
• acquire
• from the first encoder (11) position and speed data of the transport units (2),
• from the first vision system (12) data relating to the classified transported objects (3),
• from the first measuring system (7) data indicative of the dimensions of the objects (3) transported;
• process the acquired data and
• control the operation of the handling (4) and gripping (5) systems on the basis of the processed data.

16. The system of claim 15, wherein the first vision system (12), that comprises a plurality of sensors, is configured to measure the dimensions of the objects (3) transported by the transport units (2) and provide the electronic processing and control means with also data indicative of the dimensions of the objects (3) transported.

17. The system of claim 15 or 16, wherein the electronic processing and control means are configured to, on the basis of the acquired data, record and update, in temporal sequence, a map of the data relating to the transport units (2).

18. The system according to any claim 15-17, wherein the processing and control means are configured to, on the basis of the acquired data, record and update, in a temporal sequence, a map of the data relating to the objects (3) transported by the transport units (2).

19. The system according to any one of claims 13-18, further comprising a feeding system (6) configured to receive objects (32) extracted from the automated means of transport (1); wherein the electronic processing and control means are configured to control the handling system (4) and the gripping system (5) such that they place on the feeding system (6) the given object (32) extracted from the automated means of transport (1).

20. The system according to claim 19, wherein the feeding system (6) includes transport units with an autonomous movement system or static feeding units.

21. The system according to any one of claims 13-18, wherein the handling system (4) and the gripping system (5) place the given object (32) on a predetermined transport unit according to any claim 1-8.

22. The system according to claim 19 or 20, further comprising:
• a second encoder (15) configured to provide position, speed and direction data of the feeding system (6);
• a second vision system (13) configured to classify objects (31) on the feeding system (6); and
• a second measurement system (16) configured to measure the dimensions of the objects (31) on the feeding system (6) ;
wherein the electronic processing and control means are configured to:
• acquire
• from the second encoder (15) the position, speed and direction data of the feeding system (6),
• from the second vision system (13) data relating to the classified objects (3) on the feeding system (6),
• from the second measurement system (16) data indicative of the dimensions of the object (31) on the feeding system (6);
• process the acquired data and
• control the operation of the handling (4) and gripping (5) systems on the basis of the processed data.

23. System according to claim 22, wherein the second vision system (13), that comprises a plurality of sensors, is configured to measure the dimensions of the objects (3) on the feeding system (6) and also provide the electronic processing and control means with data indicative of the dimensions of the objects (3) on the feeding system (6).

## Patentansprüche

1. Automatisiertes System zum Transportieren und/oder Sortieren von Objekten (3), aufweisend:
eine automatisierte Transporteinrichtung (1), die Transporteinheiten (2) aufweist, die dafür konfiguriert sind, Objekte (3) zu transportieren;
ein Handhabungssystem (4), das mit einem Greifsystem (5) ausgestattet ist und zum Laden von Objekten (31) auf die automatisierte Transporteinrichtung (1) betreibbar ist; und
eine elektronische Verarbeitungs- und Steuereinrichtung, die dafür konfiguriert ist:
Daten zu empfangen, die mit der Position und der Geschwindigkeit der Transporteinheiten (2) in Beziehung stehen, und Daten, die die geometrischen Eigenschaften und/oder Abmessungen der transportierten Objekte (3) anzeigen;
die empfangenen Daten zu verarbeiten; und
den Betrieb des Handhabungssystems (4) und des Greifsystems (5) basierend auf den verarbeiteten Daten zu steuern;
**dadurch gekennzeichnet, dass**
die Verarbeitungs- und Steuereinrichtung, um ein bestimmtes Objekt (31) auf eine vorgegebene Transporteinheit (21) zu laden, dafür programmiert ist:
eine erste Trajektorie zu bestimmen, die durch das Handhabungssystem (4) über N erste Objekte (3) ausgeführt werden soll, die durch die Transporteinheiten (2) transportiert werden, um die vorgegebene Transporteinheit (21) zu erreichen, wobei N eine ganze Zahl größer als Null ist;
eine erste maximale Höhe zwischen den Höhen der N ersten Objekte (3) zu bestimmen;
das Handhabungssystem (4) und das Greifsystem (5) derart zu steuern, dass sie
die erste Trajektorie ausführen, wobei das vorgegebene Objekt (31) in einer derartigen Höhe gehalten wird, dass eine Unterseite des bestimmten Objekts (31) über der ersten vorgegebenen maximalen Höhe bleibt; und
bei Erreichen der vorgegebenen Transporteinheit (21) das vorgegebene Objekt (31) auf der vorgegebenen Transporteinheit (21) platzieren.

2. System nach Anspruch 1, wobei die elektronische Verarbeitungs- und Steuereinrichtung dafür programmiert ist, das Handhabungssystem (4) und das Greifsystem (5) so zu steuern, dass das vorgegebene Objekt (31) mit einer Geschwindigkeit auf der vorgegebene Transporteinheit (21) platziert wird, die
eine erste Komponente in der Bewegungsrichtung der vorgegebenen Transporteinheit (21) und
eine zweite Komponente hat, die in der gleichen Ebene wie die erste Komponente liegt und orthogonal zur ersten Komponente ist, nämlich orthogonal zur Bewegungsrichtung der vorgegebenen Transporteinheit (21), wobei
die erste und die zweite Geschwindigkeitskomponente auf einer Ebene parallel zur Oberfläche der vorgegebenen Transporteinheit (21) im Abschnitt des Pfades liegen, in dem sich das Handhabungssystems (4) und das Greifsystem (5) über der vorgegebenen Transporteinheit (21) befinden,
die erste Komponente gleich der Geschwindigkeit der vorgegebenen Transporteinheit (21) ist, und
die zweite Komponente null beträgt.

3. System nach Anspruch 1 oder 2, wobei die elektronische Verarbeitungs- und Steuereinrichtung dafür konfiguriert ist, den Betrieb des Handhabungssystems (4) und des Greifsystems (5) basierend auf den verarbeiteten Daten zu steuern, um das vorgegebene Objekt (31) auf der vorgegebenen Transporteinheit (21) so auszurichten und zu zentrieren, dass sichergestellt ist, dass ein Schwerpunkt der durch die Draufsicht des vorgegebenen Objekts (31) erzeugten Fläche mit einem Mittelpunkt der Transportfläche der vorgegebenen Transporteinheit (21) übereinstimmt.

4. System nach einem der Ansprüche 1 bis 3, ferner aufweisend:
einen ersten Encoder (11), der dafür konfiguriert ist, die Position und Geschwindigkeit der Transporteinheiten (2) bereitzustellen;
ein erstes Bildverarbeitungssystem (12), das dafür konfiguriert ist, durch die Transporteinheiten (2) transportierte Objekte (3) zu klassifizieren; und
ein erstes Messsystem (7), das dafür konfiguriert ist, die Abmessungen der durch die Transporteinheiten (2) transportierten Objekte (3) zu messen,
wobei die elektronische Verarbeitungs- und Steuereinrichtung dafür konfiguriert ist:
vom ersten Encoder (11) Positions- und Geschwindigkeitsdaten der Transporteinheiten (2) zu erfassen;
vom ersten Bildverarbeitungssystem (12) Daten zu erfassen, die mit den klassifizierten transportierten Objekten (3) in Beziehung stehen;
vom ersten Messsystem (7) Daten zu erfassen, die die Abmessungen der transportierten Objekte (3) anzeigen;
die erfassten Daten zu verarbeiten; und
den Betrieb des Handhabungssystems (4) und des Greifsystems (5) basierend auf den verarbeiteten Daten zu steuern.

5. System nach Anspruch 4, wobei das erste Bildverarbeitungssystem (12), das eine Vielzahl von Sensoren aufweist, dafür konfiguriert ist, die Abmessungen der durch die Transporteinheiten (2) transportierten Objekte (3) zu messen und der elektronischen Verarbeitungs- und Steuereinrichtung auch Daten zur Verfügung zu stellen, die die Abmessungen der transportierten Objekte (3) angeben.

6. System nach Anspruch 4 oder 5, wobei die elektronische Verarbeitungs- und Steuereinrichtung dafür konfiguriert ist, den Betrieb des Handhabungssystems (4) und des Greifsystems (5) basierend auf der Verarbeitung der durch das erste Bildverarbeitungssystem (12) erfassten Daten zu steuern, um das bestimmt Objekt (31) auf der vorgegebenen Transporteinheit (21) auszurichten und zu zentrieren, um sicherzustellen, dass der Schwerpunkt der durch die Draufsicht des vorgegebenen Objekts (31) erzeugten Fläche mit dem Mittelpunkt der Transportfläche der vorgegebenen Transporteinheit (21) übereinstimmt.

7. System nach einem der Ansprüche 4 bis 6, wobei die elektronische Verarbeitungs- und Steuereinrichtung dafür konfiguriert ist, basierend auf den erfassten Daten in zeitlicher Folge eine Karte der Daten aufzuzeichnen und zu aktualisieren, die mit den Transporteinheiten (2) in Beziehung stehen.

8. System nach einem der Ansprüche 4 bis 7, wobei die Verarbeitungs- und Steuereinrichtung dafür konfiguriert ist, basierend auf den erfassten Daten in einer zeitlichen Folge eine Karte der Daten aufzuzeichnen und zu aktualisieren, die mit den durch die Transporteinheiten (2) transportierten Objekten (3) in Beziehung stehen.

9. System nach einem der vorangehenden Ansprüche, ferner aufweisend ein Zuführsystem (6), das dafür konfiguriert ist, Objekte (31) bereitzustellen, die auf die automatisierte Transporteinrichtung (1) geladen werden sollen,
wobei die elektronische Verarbeitungs- und Steuereinrichtung dafür konfiguriert ist, das Handhabungssystem (4) und das Greifsystem (5) derart zu steuern, dass sie das jeweilige Objekt (31), das auf die vorgegebene Transporteinheit (21) geladen werden soll, vom Zuführsystem (6) aufnehmen.

10. System nach Anspruch 9, wobei das Zuführsystem (6) Transporteinheiten (2) mit einem autonomen Bewegungssystem oder statischen Zuführeinheiten aufweist.

11. System nach Anspruch 9 oder 10, ferner aufweisend:
einen zweiten Encoder (15), der dafür konfiguriert ist, Positions-, Geschwindigkeits- und Richtungsdaten des Zuführsystems (6) bereitzustellen;
ein zweites Bildverarbeitungssystem (13), das dafür konfiguriert ist, Objekte (31) auf dem Zuführsystem (6) zu klassifizieren; und
ein zweites Messsystem (16), das dafür konfiguriert ist, die Abmessungen der Objekte (31) auf dem Zuführsystem zu messen,
wobei die elektronische Verarbeitungs- und Steuereinrichtung dafür konfiguriert ist:
vom zweiten Codierer (15) die Positions-, Geschwindigkeits- und Richtungsdaten des Zuführsystems (6) zu erfassen;
vom zweiten Bildverarbeitungssystem (13) Daten zu erfassen, die mit den klassifizierten Objekten (3) auf dem Zuführsystem (6) in Beziehung stehen;
vom zweiten Messsystem (16) Daten zu erfassen, die die Abmessungen des Objekts (31) auf dem Zuführsystem (6) anzeigen;
die erfassten Daten zu verarbeiten; und
den Betrieb des Handhabungssystems (4) und des Greifsystems (5) basierend auf den verarbeiteten Daten zu steuern.

12. System nach Anspruch 11, wobei das zweite Bildverarbeitungssystem (13), das eine Vielzahl von Sensoren aufweist, dafür konfiguriert ist, die Abmessungen der Objekte (3) auf dem Zuführsystem (6) zu messen und der elektronischen Verarbeitungs- und Steuereinrichtung auch Daten zuzuführen, die die Abmessungen der Objekte (3) auf dem Zuführsystem (6) anzeigen.

13. Automatisiertes System zum Transportieren und/oder Sortieren von Objekten (3), aufweisend:
eine automatisierte Transporteinrichtung (1), die Transporteinheiten (2) aufweist, die dafür konfiguriert sind, Objekte (3) zu transportieren;
ein Handhabungssystem (4), das mit einem Greifsystem (5) ausgestattet ist und zum Extrahieren von Objekten (31) von der automatisierten Transporteinrichtung (1) betreibbar ist; und
eine elektronische Verarbeitungs- und Steuereinrichtung, die dafür konfiguriert ist:
Daten zu empfangen, die mit der Position und der Geschwindigkeit der Transporteinheiten (2) in Beziehung stehen, und Daten, die die geometrischen Eigenschaften und/oder Abmessungen der transportierten Objekte (3) anzeigen;
die empfangenen Daten zu verarbeiten; und
den Betrieb des Handhabungssystems (4) und des Greifsystems (5) basierend auf den verarbeiteten Daten zu steuern;
**dadurch gekennzeichnet, dass**
die Verarbeitungs- und Steuereinrichtung, um ein bestimmtes Objekt (31) von einer vorgegebenen Transporteinheit (22) zu extrahieren, dafür programmiert ist:
eine zweite Trajektorie zu bestimmen, die durch das Handhabungssystem (4) über N Objekte (3) ausgeführt werden soll, die durch die Transporteinheiten (2) transportiert werden, um die vorgegebene Transporteinheit (21) zu erreichen, wobei N eine ganze Zahl größer als Null ist;
eine zweite maximale Höhe zwischen
den Höhen der N Objekte (3);
der Höhe des vorgegebenen Objekts (32) zu bestimmen;
das Handhabungssystem (4) und das Greifsystem (5) derart zu steuern, dass sie
die zweite Trajektorie ausführen, während das Greifsystem (5) in einer derartigen Höhe gehalten wird, dass eine Unterseite des Greifsystems (5) über der zweiten vorgegebenen maximalen Höhe bleibt; und
beim Erreichen der vorgegebenen Transporteinheit (22) das bestimmte Objekt (32) von der vorgegebenen Transporteinheit (22) anzuheben.

14. System nach Anspruch 13, wobei die elektronische Verarbeitungs- und Steuereinrichtung dafür programmiert ist, das Handhabungssystem (4) und das Greifsystem (5) so zu steuern, dass sie das bestimmte Objekt (32) mit einer Geschwindigkeit von der vorgegebenen Transporteinheit (22) anheben, die
eine erste Komponente in der Bewegungsrichtung der vorgegebenen Transporteinheit (22); und
eine zweite Komponente aufweist, die in der gleichen Ebene wie die erste Komponente liegt und orthogonal zu dieser verläuft, d.h. zur Bewegungsrichtung der vorgegebenen Transporteinheit (22),
wobei die erste und die zweite Geschwindigkeitskomponente in einer Ebene parallel zur Oberfläche der vorgegebenen Transporteinheit (22) im dem Abschnitt der Bahn liegen, in dem sich das Handhabungssystem (4) und das Greifsystem (5) über der vorgegebenen Transporteinheit (22) befinden,
die erste Komponente gleich der Geschwindigkeit der vorgegebenen Transporteinheit (22) ist, und
die zweite Komponente null beträgt.

15. System nach Anspruch 13 oder 14, ferner aufweisend:
einen ersten Encoder (11), der dafür konfiguriert ist, die Position und Geschwindigkeit der Transporteinheiten (2) bereitzustellen;
ein erstes Bildverarbeitungssystem (12), das dafür konfiguriert ist, durch die Transporteinheiten (2) transportierte Objekte (3) zu klassifizieren; und
ein erstes Messsystem (7), das dafür konfiguriert ist, die Abmessungen der durch die Transporteinheiten (2) transportierten Objekte (3) zu messen,
wobei die elektronische Verarbeitungs- und Steuereinrichtung dafür konfiguriert ist:
vom ersten Encoder (11) Positions- und Geschwindigkeitsdaten der Transporteinheiten (2) zu erfassen;
vom ersten Bildverarbeitungssystem (12) Daten zu erfassen, die mit den klassifizierten transportierten Objekten (3) in Beziehung stehen;
vom ersten Messsystem (7) Daten zu erfassen, die die Abmessungen der transportierten Objekte (3) anzeigen;
die erfassten Daten zu verarbeiten; und
den Betrieb des Handhabungssystems (4) und des Greifsystems (5) basierend auf den verarbeiteten Daten zu steuern.

16. System nach Anspruch 15, wobei das erste Bildverarbeitungssystem (12), das eine Vielzahl von Sensoren aufweist, dafür konfiguriert ist, die Abmessungen der Objekte (3) zu messen, die durch die Transporteinheiten (2) transportiert werden, und der elektronischen Verarbeitungs- und Steuereinrichtung auch Daten zuzuführen, die die Abmessungen der transportierten Objekte (3) anzeigen.

17. System nach Anspruch 15 oder 16, wobei die elektronische Verarbeitungs- und Steuereinrichtung dafür konfiguriert ist, basierend auf den erfassten Daten in zeitlicher Folge eine Karte der Daten aufzuzeichnen und zu aktualisieren, die mit den Transporteinheiten (2) in Beziehung stehen.

18. System nach einem der Ansprüche 15 bis 17, wobei die Verarbeitungs- und Steuereinrichtung dafür konfiguriert ist, basierend auf den erfassten Daten in zeitlicher Folge eine Karte der Daten aufzuzeichnen und zu aktualisieren, die mit den Objekten (3) in Beziehung stehen, die durch die Transporteinheiten (2) transportiert werden.

19. System nach einem der Ansprüche 13 bis 18, ferner aufweisend ein Zuführsystem (6), das dafür konfiguriert ist, die Objekte (32) zu empfangen, die von der automatisierten Transporteinrichtung (1) extrahiert wurden,
wobei die elektronische Verarbeitungs- und Steuereinrichtung dafür konfiguriert ist, das Handhabungssystem (4) und das Greifsystem (5) so zu steuern, dass sie das bestimmte Objekt (32), das von der automatisierten Transporteinrichtung (1) extrahiert wurde, auf dem Zuführsystem (6) anordnen.

20. System nach Anspruch 19, wobei das Zuführsystem (6) Transporteinheiten mit einem autonomen Bewegungssystem oder statischen Zuführeinheiten aufweist.

21. System nach einem der Ansprüche 13 bis 18,
wobei das Handhabungssystem (4) und das Greifsystem (5) das bestimmte Objekt (32) auf einer vorgegebenen Transporteinheit nach einem der Ansprüche 1 bis 8 platzieren.

22. System nach Anspruch 19 oder 20, ferner aufweisend:
einen zweiten Encoder (15), der dafür konfiguriert ist, Positions-, Geschwindigkeits- und Richtungsdaten des Zuführsystems (6) bereitzustellen;
ein zweites Bildverarbeitungssystem (13), das dafür konfiguriert ist, Objekte (31) auf dem Zuführsystem (6) zu klassifizieren; und
ein zweites Messsystem (16), das dafür konfiguriert ist, die Abmessungen der Objekte (31) auf dem Zuführsystem (6) zu messen,
wobei die elektronische Verarbeitungs- und Steuereinrichtung dafür konfiguriert ist:
vom zweiten Encoder (15) die Positions-, Geschwindigkeits- und Richtungsdaten des Zuführsystems (6) zu erfassen;
vom zweiten Bildverarbeitungssystem (13) Daten zu erfassen, die mit den klassifizierten Objekten (3) auf dem Zuführsystem (6) in Beziehung stehen;
vom zweiten Messsystem (16) Daten zu erfassen, die die Abmessungen des Objekts (31) auf dem Zuführsystem (6) anzeigen;
die erfassten Daten zu verarbeiten; und
den Betrieb des Handhabungssystems (4) und des Greifsystems (5) basierend auf den verarbeiteten Daten zu steuern.

23. System nach Anspruch 22, wobei das zweite Bildverarbeitungssystem (13), das eine Vielzahl von Sensoren aufweist, dafür konfiguriert ist, die Abmessungen der Objekte (3) auf dem Zuführsystem (6) zu messen und außerdem der elektronischen Verarbeitungs- und Steuereinrichtung Daten zuzuführen, die die Abmessungen der Objekte (3) auf dem Zuführsystem (6) anzeigen.

## Revendications

1. Système automatisé de transport et/ou de tri d'objets (3) comprenant :
• des moyens de transport automatisés (1) qui comportent des unités de transport (2) conçues pour transporter des objets (3) ;
• un système de manutention (4) équipé d'un système de préhension (5) et utilisable pour charger des objets (31) sur les moyens de transport automatisés (1) ; et
• des moyens de traitement et de commande électroniques configurés pour
• recevoir des données concernant la position et la vitesse des unités de transport (2) et des données indiquant des caractéristiques géométriques et/ou des dimensions des objets (3) transportés,
• traiter les données reçues et
• commander le fonctionnement des systèmes de manutention (4) et de préhension (5) sur la base des données traitées ;
**caractérisé par le fait que** les moyens de traitement et de commande, afin de charger un objet donné (31) sur une unité de transport prédéterminée (21), sont programmés pour :
• déterminer une première trajectoire à exécuter par le système de manutention (4) sur N premiers objets (3) transportés par les unités de transport (2) pour atteindre ladite unité de transport prédéterminée (21), dans lequel N est un nombre entier supérieur à zéro,
• déterminer une première hauteur maximale entre les hauteurs des N premiers objets (3),
• commander le système de manutention (4) et le système de préhension (5) de sorte qu'ils
• exécutent la première trajectoire tout en maintenant l'objet donné (31) à une hauteur telle qu'une surface inférieure dudit objet donné (31) reste au-dessus de ladite première hauteur maximale déterminée et,
• une fois l'unité de transport prédéterminée (21) atteinte, placent l'objet donné (31) sur ladite unité de transport prédéterminée (21).

2. Système selon la revendication 1, dans lequel les moyens de traitement et de commande électroniques sont programmés pour commander le système de manutention (4) et le système de préhension (5) de sorte qu'ils placent l'objet donné (31) sur l'unité de transport prédéterminée (21) à une vitesse présentant :
• une première composante dans la direction de déplacement de l'unité de transport prédéterminée (21) et
• une deuxième composante située dans le même plan que la première composante et orthogonale à la première composante, à savoir orthogonale à la direction de déplacement de l'unité de transport prédéterminée (21) dans lequel
• les première et deuxième composantes de vitesse sont situées dans un plan parallèle à la surface de l'unité de transport prédéterminée (21) dans la section du trajet où les systèmes de manutention (4) et de préhension (5) se trouvent au-dessus de l'unité de transport prédéterminée (21),
• la première composante est égale à la vitesse de ladite unité de transport prédéterminée (21), et
• la deuxième composante est nulle.

3. Système selon la revendication 1 ou 2, dans lequel les moyens de traitement et de commande électroniques sont configurés pour commander le fonctionnement des systèmes de manutention (4) et de préhension (5) sur la base des données traitées afin d'orienter et de centrer l'objet donné (31) sur l'unité de transport prédéterminée (21) de manière à ce qu'un centroïde de la surface générée par la vue en plan de l'objet donné (31) coïncide avec un centre de la surface de transport de l'unité de transport prédéterminée (21).

4. Système selon l'une quelconque des revendications 1 à 3, comprenant en outre :
• un premier codeur (11) configuré pour fournir la position et la vitesse des unités de transport (2) ;
• un premier système de vision (12) configuré pour classer des objets (3) transportés par les unités de transport (2) ; et
• un premier système de mesure (7) configuré pour mesurer les dimensions des objets (3) transportés par les unités de transport (2) ;
dans lequel les moyens de traitement et de commande électroniques sont configurés pour :
• acquérir
• à partir du premier codeur (11), des données de position et de vitesse des unités de transport (2),
• à partir du premier système de vision (12), des données concernant les objets (3) transportés classés,
• à partir du premier système de mesure (7), des données indiquant les dimensions des objets (3) transportés ;
• traiter les données acquises et
• commander le fonctionnement des systèmes de manutention (4) et de préhension (5) sur la base des données traitées.

5. Système selon la revendication 4, dans lequel le premier système de vision (12), qui comprend une pluralité de capteurs, est configuré pour mesurer les dimensions des objets (3) transportés par les unités de transport (2) et fournir aux moyens de traitement et de commande électroniques également des données indiquant les dimensions des objets (3) transportés.

6. Système selon la revendication 4 ou 5, dans lequel les moyens de traitement et de commande électroniques sont configurés pour commander le fonctionnement des systèmes de manutention (4) et de préhension (5) sur la base du traitement des données acquises par le premier système de vision (12), afin d'orienter et de centrer l'objet donné (31) sur l'unité de transport prédéterminée (21) de manière à s'assurer qu'un centroïde de la surface générée par la vue en plan de l'objet donné (31) coïncide avec un centre de la surface de transport de l'unité de transport prédéterminée (21).

7. Système selon l'une quelconque des revendications 4 à 6, dans lequel les moyens de traitement et de commande électroniques sont configurés pour enregistrer et mettre à jour, sur la base des données acquises, dans une séquence temporelle, une carte des données concernant les unités de transport (2).

8. Système selon l'une quelconque des revendications 4 à 7, dans lequel les moyens de traitement et de commande sont configurés pour enregistrer et mettre à jour, sur la base des données acquises, dans une séquence temporelle, une carte des données concernant les objets (3) transportés par les unités de transport (2).

9. Système selon une quelconque revendication précédente, comprenant en outre un système d'alimentation (6) configuré pour fournir des objets (31) à charger sur les moyens de transport automatisés (1) ; dans lequel les moyens de traitement et de commande électroniques sont configurés pour commander le système de manutention (4) et le système de préhension (5) de sorte qu'ils prélèvent du système d'alimentation (6) l'objet donné (31) à charger sur l'unité de transport prédéterminée (21).

10. Système selon la revendication 9, dans lequel le système d'alimentation (6) comporte des unités de transport (2) avec un système de déplacement autonome ou des unités d'alimentation statiques.

11. Système selon la revendication 9 ou 10, comprenant en outre :
• un deuxième codeur (15) configuré pour fournir des données de position, de vitesse et de direction du système d'alimentation (6) ;
• un deuxième système de vision (13) configuré pour classer des objets (31) sur le système d'alimentation (6) ; et
• un deuxième système de mesure (16) configuré pour mesurer les dimensions des objets (31) sur le système d'alimentation (6) ;
dans lequel les moyens de traitement et de commande électroniques sont configurés pour :
• acquérir
• à partir du deuxième codeur (15), les données de position, de vitesse et de direction du système d'alimentation (6),
• à partir du deuxième système de vision (13), des données concernant les objets classés (3) sur le système d'alimentation (6),
• à partir du deuxième système de mesure (16), des données indiquant les dimensions de l'objet (31) sur le système d'alimentation (6) ;
• traiter les données acquises et
• commander le fonctionnement des systèmes de manutention (4) et de préhension (5) sur la base des données traitées.

12. Système selon la revendication 11, dans lequel le deuxième système de vision (13), qui comprend une pluralité de capteurs, est configuré pour mesurer les dimensions des objets (3) sur le système d'alimentation (6) et fournir aux moyens de traitement et de commande électroniques également des données indiquant les dimensions des objets (3) sur le système d'alimentation (6).

13. Système automatisé de transport et/ou de tri d'objets (3) comprenant :
• des moyens de transport automatisés (1) qui comportent des unités de transport (2) conçues pour transporter des objets (3) ;
• un système de manutention (4) équipé d'un système de préhension (5) et utilisable pour extraire des objets (32) des moyens de transport automatisés (1) ; et
• des moyens de traitement et de commande électroniques configurés pour
• recevoir des données concernant la position et la vitesse des unités de transport (2) et des données indiquant des caractéristiques géométriques et/ou des dimensions des objets (3) transportés
• traiter les données reçues et
• commander le fonctionnement des systèmes de manutention (4) et de préhension (5) sur la base des données traitées ;
**caractérisé par le fait que** les moyens de traitement et de commande, afin d'extraire un objet donné (32) d'une unité de transport prédéterminée (22), sont programmés pour :
• déterminer une deuxième trajectoire à exécuter par le système de manutention (4) sur N objets (3) transportés par les unités de transport (2) pour atteindre ladite unité de transport prédéterminée (22), dans lequel N est un nombre entier supérieur à zéro,
• déterminer une deuxième hauteur maximale entre
• les hauteurs des N objets (3) et
• la hauteur de l'objet donné (32)
• commander le système de manutention (4) et le système de préhension (5) de sorte qu'ils
• exécutent la deuxième trajectoire tout en maintenant le système de préhension (5) à une hauteur telle qu'une surface inférieure dudit système de préhension (5) reste au-dessus de ladite deuxième hauteur maximale déterminée ; et
• une fois l'unité de transport prédéterminée (22) atteinte, soulèvent l'objet donné (32) de ladite unité de transport prédéterminée (22).

14. Système selon la revendication 13, dans lequel les moyens de traitement et de commande électroniques sont programmés pour commander le système de manutention (4) et le système de préhension (5) de sorte qu'ils soulèvent l'objet donné (32) de l'unité de transport prédéterminée (22) à une vitesse présentant :
• une première composante dans la direction de déplacement de l'unité de transport prédéterminée (22),
• une deuxième composante située dans le même plan que la première composante et orthogonale à cette dernière, à savoir à la direction de déplacement de l'unité de transport (22) prédéterminée, dans lequel
• les première et deuxième composantes de vitesse sont situées dans un plan parallèle à la surface de l'unité de transport (22) prédéterminée dans la section du trajet où les systèmes de manutention (4) et de préhension (5) se trouvent au-dessus de l'unité de transport (22) prédéterminée
• la première composante est égale à la vitesse de ladite unité de transport prédéterminée (22), et
• la deuxième composante est nulle.

15. Système selon la revendication 13 ou 14, comprenant en outre :
• un premier codeur (11) configuré pour fournir la position et la vitesse des unités de transport (2) ;
• un premier système de vision (12) configuré pour classer des objets (3) transportés par les unités de transport (2) ; et
• un premier système de mesure (7) configuré pour mesurer les dimensions des objets (3) transportés par les unités de transport (2) ;
dans lequel les moyens de traitement et de commande électroniques sont configurés pour :
• acquérir
• à partir du premier codeur (11), des données de position et de vitesse des unités de transport (2),
• à partir du premier système de vision (12), des données concernant les objets (3) transportés classés,
• à partir du premier système de mesure (7), des données indiquant les dimensions des objets (3) transportés ;
• traiter les données acquises et
• commander le fonctionnement des systèmes de manutention (4) et de préhension (5) sur la base des données traitées.

16. Système selon la revendication 15, dans lequel le premier système de vision (12), qui comprend une pluralité de capteurs, est configuré pour mesurer les dimensions des objets (3) transportés par les unités de transport (2) et fournir aux moyens de traitement et de commande électroniques également des données indiquant les dimensions des objets (3) transportés.

17. Système selon la revendication 15 ou 16, dans lequel les moyens de traitement et de commande électroniques sont configurés pour enregistrer et mettre à jour, sur la base des données acquises, dans une séquence temporelle, une carte des données concernant les unités de transport (2).

18. Système selon l'une quelconque des revendications 15 à 17, dans lequel les moyens de traitement et de commande sont configurés pour enregistrer et mettre à jour, sur la base des données acquises, dans une séquence temporelle, une carte des données concernant les objets (3) transportés par les unités de transport (2).

19. Système selon l'une quelconque des revendications 13 à 18, comprenant en outre un système d'alimentation (6) configuré pour recevoir des objets (32) extraits des moyens de transport automatisés (1) ; dans lequel les moyens de traitement et de commande électroniques sont configurés pour commander le système de manutention (4) et le système de préhension (5) de sorte qu'ils placent sur le système d'alimentation (6) l'objet donné (32) extrait des moyens de transport automatisés (1).

20. Système selon la revendication 19, dans lequel le système d'alimentation (6) comporte des unités de transport avec un système de déplacement autonome ou des unités d'alimentation statiques.

21. Système selon l'une quelconque des revendications 13 à 18,
dans lequel le système de manutention (4) et le système de préhension (5) placent l'objet donné (32) sur une unité de transport prédéterminée selon l'une quelconque des revendications 1 à 8.

22. Système selon la revendication 19 ou 20, comprenant en outre :
• un deuxième codeur (15) configuré pour fournir des données de position, de vitesse et de direction du système d'alimentation (6) ;
• un deuxième système de vision (13) configuré pour classer des objets (31) sur le système d'alimentation (6) ; et
• un deuxième système de mesure (16) configuré pour mesurer les dimensions des objets (31) sur le système d'alimentation (6) ;
dans lequel les moyens de traitement et de commande électroniques sont configurés pour :
• acquérir
• à partir du deuxième codeur (15), les données de position, de vitesse et de direction du système d'alimentation (6),
• à partir du deuxième système de vision (13), des données concernant les objets classés (3) sur le système d'alimentation (6),
• à partir du deuxième système de mesure (16), des données indiquant les dimensions de l'objet (31) sur le système d'alimentation (6) ;
• traiter les données acquises et
• commander le fonctionnement des systèmes de manutention (4) et de préhension (5) sur la base des données traitées.

23. Système selon la revendication 22, dans lequel le deuxième système de vision (13), qui comprend une pluralité de capteurs, est configuré pour mesurer les dimensions des objets (3) sur le système d'alimentation (6) et fournir également aux moyens de traitement et de commande électroniques des données indiquant les dimensions des objets (3) sur le système d'alimentation (6).
